# EUROPEAN PATENT APPLICATION

(11) **EP 4 694 468 A1**
(43) Date of publication of application: **11.02.2026**
(21) Application number: 24785363.3
(22) Date of filing: 08.04.2024
(51) Int. Cl.: H04W 72/12, H04W 72/232, H04W 72/04, H04L 5/14

(54) **METHOD AND DEVICE FOR TRANSMITTING/RECEIVING DOWNLINK DATA CHANNEL IN FULL DUPLEX COMMUNICATION**

(30) Priority: 07.04.2023 KR 20230046112; 05.04.2024 KR 20240046531
(71) Applicant: KT Corporation, Seongnam-si, Gyeonggi-do 13606 (KR)
(72) Inventor: PARK, Kyu Jin, Seongnam-si Gyeonggi-do 13606 (KR)
(74) Representative: Santarelli
(86) International application number: PCT/KR2024/004607
(87) International publication number: WO 2024/210666

(57) **Abstract**

Provided is a method of a terminal for receiving a downlink data channel in full duplex communication. The method may include: receiving TDD configuration information and subband configuration information; receiving downlink control information including resource allocation information about a PDSCH scheduled through a plurality of slots; determining at least one symbol for receiving the PDSCH in each of the plurality of slots on the basis of the downlink control information; and receiving the PDSCH on the basis of whether the at least one symbol includes an SBFD symbol configured according to the TDD configuration information and the subband configuration information.

## Description

### Technical Field

The present disclosure relates to methods and devices for transmitting and receiving a downlink data channel in a next-generation radio access network (hereinafter, "new radio (NR)").

### Background Art

Recently, the 3rd generation partnership project (3GPP) has approved the "Study on New Radio Access Technology", which is a study item for research on next-generation/5G radio access technology(hereinafter, referred to as "new radio" or "NR"). On the basis of the Study on New Radio Access Technology, Radio Access Network Working Group 1 (RAN WG1) has been discussing frame structures, channel coding and modulation, waveforms, multiple access methods, and the like for the new radio (NR). It is required to design the NR not only to provide an improved data transmission rate as compared with the long term evolution (LTE)/LTE-Advanced, but also to meet various requirements in detailed and specific usage scenarios.

An enhanced mobile broadband (eMBB), massive machine-type communication (mMTC), and ultra reliable and low latency communication (URLLC) are proposed as representative usage scenarios of the NR. In order to meet the requirements of the individual scenarios, it is required to design the NR to have flexible frame structures, compared with the LTE/LTE-Advanced.

Because the requirements for data rates, latency, reliability, coverage, etc. are different from each other, there is a need for a method for efficiently multiplexing a radio resource unit based on different numerologies from other (e.g., subcarrier spacing, subframe, Transmission Time Interval (TTI), etc.) as a method for efficiently satisfying each usage scenario requirement through a frequency band constituting any NR system.

As part of this aspect, a need exists for a specific design capable of efficiently performing transmission/reception of a downlink data channel in a symbol where full-duplex communication is applied in a wireless network.

### Detailed Description of the Invention

### Technical Problem

The disclosure may provide a method and device for transmitting/receiving a downlink data channel in full-duplex communication.

### Technical Solution

In accordance with an embodiment, the present disclosure provides a method for an UE to receive a physical downlink shared channel (PDSCH) in full duplex. The method may include receiving time division duplex (TDD) configuration information and subband configuration information, receiving downlink control information including resource allocation information for a PDSCH scheduled through a plurality of slots, determining at least one symbol for receiving the PDSCH in each of the plurality of slots based on the downlink control information, and receiving the PDSCH based on whether the at least one symbol includes a subband full duplex (SBFD) symbol configured according to the TDD configuration information and the subband configuration information.

In accordance with another embodiment, the present disclosure provides a method for a base station to transmit a physical downlink shared channel (PDSCH) in full duplex. The method may include transmitting time division duplex (TDD) configuration information and subband configuration information, transmitting downlink control information including resource allocation information for a PDSCH scheduled through a plurality of slots, and transmitting the PDSCH based on whether at least one symbol for transmitting the PDSCH in each of the plurality of slots includes a subband full duplex (SBFD) symbol configured according to the TDD configuration information and the subband configuration information.

In accordance with yet another embodiment, the present disclosure provides a UE for receiving a physical downlink shared channel (PDSCH) in full duplex. The UE may include a transmitter, a receiver, and a controller for controlling operations of the transmitter and the receiver, wherein the controller is configured to receive time division duplex (TDD) configuration information and subband configuration information, receive downlink control information including resource allocation information for a PDSCH scheduled through a plurality of slots, determine at least one symbol for receiving the PDSCH in each of the plurality of slots based on the downlink control information, and receive the PDSCH based on whether the at least one symbol includes a subband full duplex (SBFD) symbol configured according to the TDD configuration information and the subband configuration information.

In accordance with further another aspect, the present disclosure provides a base station for transmitting a physical downlink shared channel (PDSCH) in full duplex. The base station may include a transmitter, a receiver, and a controller for controlling operations of the transmitter and the receiver, wherein the controller is configured to transmit time division duplex (TDD) configuration information and subband configuration information, transmit downlink control information including resource allocation information for a PDSCH scheduled through a plurality of slots, and transmit the PDSCH based on whether at least one symbol for transmitting the PDSCH in each of the plurality of slots includes a subband full duplex (SBFD) symbol configured according to the TDD configuration information and the subband configuration information.

### Advantageous Effects

According to the embodiments, a downlink data channel may be efficiently transmitted or received within a slot or symbol where full-duplex communication is applied.

### Brief Description of Drawings

FIG. 1 is a view schematically illustrating an NR wireless communication system in accordance with embodiments of the present disclosure.
FIG. 2 is a view schematically illustrating a frame structure in an NR system in accordance with embodiments of the present disclosure.
FIG. 3 is a view for explaining resource grids supported by a radio access technology in accordance with embodiments of the present disclosure.
FIG. 4 is a view for explaining bandwidth parts supported by a radio access technology in accordance with embodiments of the present disclosure.
FIG. 5 is a view illustrating an example of a synchronization signal block in a radio access technology in accordance with embodiments of the present disclosure.
FIG. 6 is a signal diagram for explaining a random access procedure in a radio access technology in accordance with embodiments of the present disclosure.
FIG. 7 is a view for explaining CORESET.
FIG. 8 is a flowchart illustrating a method of receiving a downlink data channel by a UE according to an embodiment.
FIG. 9 is a flowchart illustrating a method of transmitting a downlink data channel by a base station according to an embodiment.
FIGS. 10 and 11 are views illustrating a TDD frame in which an uplink subband is configured in a downlink slot according to an embodiment.
FIG. 12 is a block diagram illustrating a UE according to an embodiment; and
FIG. 13 is a block diagram illustrating a base station according to an embodiment.

### Mode for Carrying out the Invention

Hereinafter, some embodiments of the present disclosure will be described in detail with reference to the accompanying illustrative drawings. In the drawings, like reference numerals are used to denote like elements throughout the drawings, even if they are shown on different drawings. Further, in the following description of the present disclosure, a detailed description of known functions and configurations incorporated herein will be omitted when it may make the subject matter of the present disclosure rather unclear. When the expression "include", "have", "comprise", or the like as mentioned herein is used, any other part may be added unless the expression "only" is used. When an element is expressed in the singular, the element may cover the plural form unless a special mention is explicitly made of the element.

In addition, terms, such as first, second, A, B, (A), (B) or the like may be used herein when describing components of the present disclosure. Each of these terminologies is not used to define an essence, order or sequence of a corresponding component but used merely to distinguish the corresponding component from other component(s).

In describing the positional relationship between components, if two or more components are described as being "connected", "combined", or "coupled" to each other, it should be understood that two or more components may be directly "connected", "combined", or "coupled" to each other, and that two or more components may be "connected", "combined", or "coupled" to each other with another component "interposed" therebetween. In this case, another component may be included in at least one of the two or more components that are "connected", "combined", or "coupled" to each other.

In the description of a sequence of operating methods or manufacturing methods, for example, the expressions using "after", "subsequent to", "next", "before", and the like may also encompass the case in which operations or processes are performed discontinuously unless "immediately" or "directly" is used in the expression.

Numerical values for components or information corresponding thereto (e.g., levels or the like), which are mentioned herein, may be interpreted as including an error range caused by various factors (e.g., process factors, internal or external impacts, noise, etc.) even if an explicit description thereof is not provided.

The wireless communication system in the present specification refers to a system for providing various communication services, such as a voice service and a data service, using radio resources. The wireless communication system may include a user equipment (UE), a base station, a core network, and the like.

Embodiments disclosed below may be applied to a wireless communication system using various radio access technologies. For example, the embodiments may be applied to various radio access technologies such as code division multiple access (CDMA), frequency division multiple access (FDMA), time division multiple access (TDMA), orthogonal frequency division multiple access (OFDMA), single-carrier frequency division multiple access (SC-FDMA), non-orthogonal multiple access (NOMA), or the like. In addition, the radio access technology may refer to respective generation communication technologies established by various communication organizations, such as 3GPP, 3GPP2, Wi-Fi, Bluetooth, IEEE, ITU, or the like, as well as a specific access technology. For example, CDMA may be implemented as a wireless technology such as universal terrestrial radio access (UTRA) or CDMA2000. TDMA may be implemented as a wireless technology such as global system for mobile communications (GSM)/general packet radio service (GPRS)/enhanced data rates for GSM evolution (EDGE). OFDMA may be implemented as a wireless technology such as IEEE (Institute of Electrical and Electronics Engineers) 802.11 (Wi-Fi), IEEE 802.16 (WiMAX), IEEE 802-20, evolved UTRA (E-UTRA), and the like. IEEE 802.16m is evolution of IEEE 802.16e, which provides backward compatibility with systems based on IEEE 802.16e. UTRA is a part of a universal mobile telecommunications system (UMTS). 3GPP (3rd-generation partnership project) LTE (long-term evolution) is a part of E-UMTS (evolved UMTS) using evolved-UMTS terrestrial radio access (E-UTRA), which adopts OFDMA in a downlink and SC-FDMA in an uplink. As described above, the embodiments may be applied to radio access technologies that have been launched or commercialized, and may be applied to radio access technologies that are being developed or will be developed in the future.

The UE used in the specification must be interpreted as a broad meaning that indicates a device including a wireless communication module that communicates with a base station in a wireless communication system. For example, the UE includes user equipment (UE) in WCDMA, LTE, NR, HSPA, IMT-2020 (5G or New Radio), and the like, a mobile station in GSM, a user terminal (UT), a subscriber station (SS), a wireless device, and the like. In addition, the UE may be a portable user device, such as a smart phone, or may be a vehicle, a device including a wireless communication module in the vehicle, and the like in a V2X communication system according to the usage type thereof. In the case of a machine-type communication (MTC) system, the UE may refer to an MTC terminal, an M2M terminal, or a URLLC terminal, which employs a communication module capable of performing machine-type communication.

A base station or a cell in the present specification refers to an end that communicates with a UE through a network and encompasses various coverage regions such as a Node-B, an evolved Node-B (eNB), a gNode-B, a low-power node (LPN), a sector, a site, various types of antennas, a base transceiver system (BTS), an access point, a point (e.g., a transmission point, a reception point, or a transmission/reception point), a relay node, a megacell, a macrocell, a microcell, a picocell, a femtocell, a remote radio head (RRH), a radio unit (RU), a small cell, and the like. In addition, the cell may be used as a meaning including a bandwidth part (BWP) in the frequency domain. For example, the serving cell may refer to an active BWP of a UE.

The various cells listed above are provided with a base station controlling one or more cells, and the base station may be interpreted as two meanings. The base station may be 1) a device for providing a megacell, a macrocell, a microcell, a picocell, a femtocell, or a small cell in connection with a wireless region, or the base station may be 2) a wireless region itself. In the above description 1), the base station may be the devices controlled by the same entity and providing predetermined wireless regions or all devices interacting with each other and cooperatively configuring a wireless region. For example, the base station may be a point, a transmission/reception point, a transmission point, a reception point, and the like according to the configuration method of the wireless region. In the above description 2), the base station may be the wireless region in which a user equipment (UE) may be enabled to transmit data to and receive data from the other UE or a neighboring base station.

In this specification, the cell may refer to coverage of a signal transmitted from a transmission/reception point, a component carrier having coverage of a signal transmitted from a transmission/reception point (or a transmission point), or a transmission/reception point itself.

An uplink (UL) refers to a scheme of transmitting data from a UE to a base station, and a downlink (DL) refers to a scheme of transmitting data from a base station to a UE. The downlink may mean communication or communication paths from multiple transmission/reception points to a UE, and the uplink may mean communication or communication paths from a UE to multiple transmission/reception points. In the downlink, a transmitter may be a part of the multiple transmission/reception points, and a receiver may be a part of the UE. In addition, in the uplink, the transmitter may be a part of the UE, and the receiver may be a part of the multiple transmission/reception points.

The uplink and downlink transmit and receive control information over a control channel, such as a physical downlink control channel (PDCCH) and a physical uplink control channel (PUCCH). The uplink and downlink transmit and receive data over a data channel such as a physical downlink shared channel (PDSCH) and a physical uplink shared channel (PUSCH). Hereinafter, the transmission and reception of a signal over a channel, such as PUCCH, PUSCH, PDCCH, PDSCH, or the like, may be expressed as "PUCCH, PUSCH, PDCCH, PDSCH, or the like is transmitted and received".

For the sake of clarity, the following description will focus on 3GPP LTE/LTE-A/NR (New Radio) communication systems, but technical features of the disclosure are not limited to the corresponding communication systems.

The 3GPP has been developing a 5G (5th-Generation) communication technology in order to meet the requirements of a next-generation radio access technology of ITU-R after studying 4G (4th-generation) communication technology. Specifically, 3GPP is developing, as a 5G communication technology, LTE-A pro by improving the LTE-Advanced technology so as to conform to the requirements of ITU-R and a new NR communication technology that is totally different from 4G communication technology. LTE-A pro and NR all refer to the 5G communication technology. Hereinafter, the 5G communication technology will be described on the basis of NR unless a specific communication technology is specified.

Various operating scenarios have been defined in NR in consideration of satellites, automobiles, new verticals, and the like in the typical 4G LTE scenarios so as to support an enhanced mobile broadband (eMBB) scenario in terms of services, a massive machine-type communication (mMTC) scenario in which UEs spread over a broad region at a high UE density, thereby requiring low data rates and asynchronous connections, and an ultra-reliability and low-latency (URLLC) scenario that requires high responsiveness and reliability and supports highspeed mobility.

In order to satisfy such scenarios, NR introduces a wireless communication system employing a new waveform and frame structure technology, a low-latency technology, a superhigh frequency band (mmWave) support technology, and a forward compatible provision technology. In particular, the NR system has various technological changes in terms of flexibility in order to provide forward compatibility. The primary technical features of NR will be described below with reference to the drawings.

### <Overview of NR System>

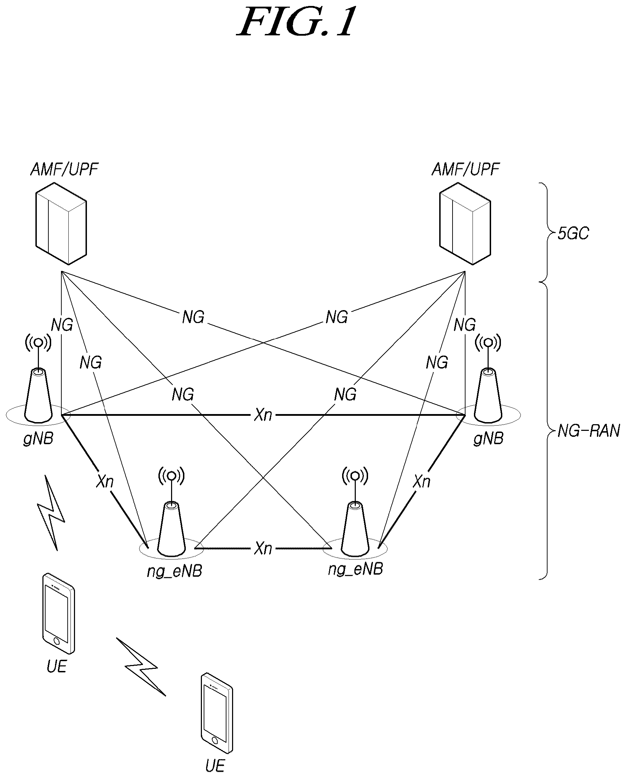

FIG. 1 is a view schematically illustrating an NR system to which the present embodiment is applicable.

Referring to FIG. 1, the NR system is divided into a 5G core network (5GC) and an NG-RAN part. The NG-RAN includes gNBs and ng-eNBs providing user plane (SDAP/PDCP/RLC/MAC/PHY) and user equipment (UE) control plane (RRC) protocol ends. The gNBs or the gNB and the ng-eNB are connected to each other through Xn interfaces. The gNB and the ng-eNB are connected to the 5GC through NG interfaces, respectively. The 5GC may be configured to include an access and mobility management function (AMF) for managing a control plane, such as a UE connection and mobility control function, and a user plane function (UPF) controlling user data. NR supports both frequency bands below 6 GHz (frequency range 1 FR1 FR1) and frequency bands equal to or greater than 6 GHz (frequency range 2 FR2 FR2).

The gNB denotes a base station that provides a UE with an NR user plane and control plane protocol end. The ng-eNB denotes a base station that provides a UE with an E-UTRA user plane and control plane protocol end. The base station described in the present specification should be understood as encompassing the gNB and the ng-eNB. However, the base station may be also used to refer to the gNB or the ng-eNB separately from each other, as necessary.

### <NR Waveform, Numerology, and Frame Structure>

NR uses a CP-OFDM waveform using a cyclic prefix for downlink transmission and uses CP-OFDM or DFT-s-OFDM for uplink transmission. OFDM technology is easy to combine with a multiple-input multiple-output (MIMO) scheme and allows a low-complexity receiver to be used with high frequency efficiency.

Since the three scenarios described above have different requirements for data rates, delay rates, coverage, and the like from each other in NR, it is necessary to efficiently satisfy the requirements for each scenario over frequency bands constituting the NR system. To this end, a technique for efficiently multiplexing radio resources based on a plurality of different numerologies has been proposed.

Specifically, the NR transmission numerology is determined on the basis of subcarrier spacing and a cyclic prefix (CP). As shown in Table 1 below, "µ" is used as an exponential value of 2 so as to be changed exponentially on the basis of 15 kHz.

**[Table 1]**

| µ | Subcarrier spacing | Cyclic prefix | Supported for data | Supported for synch |
|---|---|---|---|---|
| 0 | 15 | normal | Yes | Yes |
| 1 | 30 | normal | Yes | Yes |
| 2 | 60 | Normal, Extended | Yes | No |
| 3 | 120 | normal | Yes | Yes |
| 4 | 240 | normal | No | Yes |

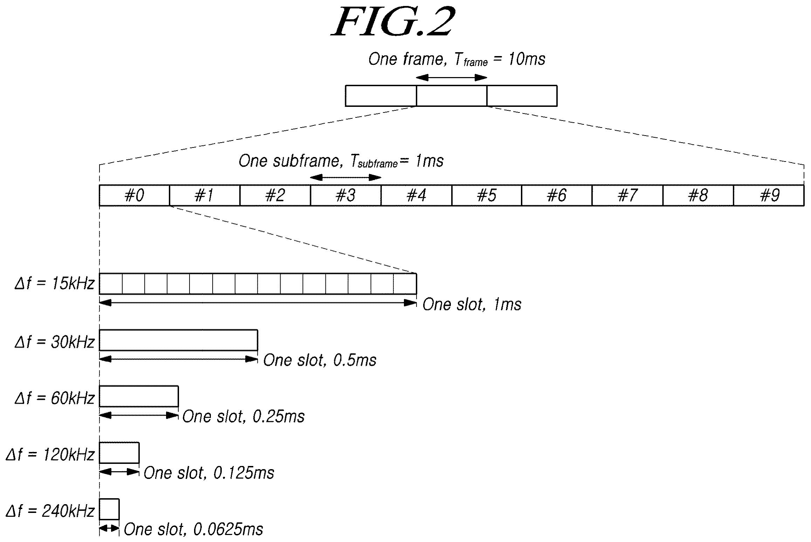

As shown in Table 1 above, NR may have five types of numerologies according to subcarrier spacing. This is different from LTE, which is one of the 4G-communication technologies, in which the subcarrier spacing is fixed to 15 kHz. Specifically, in NR, subcarrier spacing used for data transmission is 15, 30, 60, or 120 kHz, and subcarrier spacing used for synchronization signal transmission is 15, 30, 120, or 240 kHz. In addition, an extended CP is applied only to the subcarrier spacing of 60 kHz. A frame that includes 10 subframes each having the same length of 1 ms and has a length of 10 ms is defined in the frame structure in NR. One frame may be divided into half frames of 5 ms, and each half frame includes 5 subframes. In the case of a subcarrier spacing of 15 kHz, one subframe includes one slot, and each slot includes 14 OFDM symbols. FIG. 2 is a view for explaining a frame structure in an NR system to which the present embodiment may be applied. Referring to FIG. 2, a slot includes 14 OFDM symbols, which are fixed, in the case of a normal CP, but the length of the slot in the time domain may be varied depending on subcarrier spacing. For example, in the case of a numerology having a subcarrier spacing of 15 kHz, the slot is configured to have the same length of 1 ms as that of the subframe. On the other hand, in the case of a numerology having a subcarrier spacing of 30 kHz, the slot includes 14 OFDM symbols, but one subframe may include two slots each having a length of 0.5 ms. That is, the subframe and the frame may be defined using a fixed time length, and the slot may be defined as the number of symbols such that the time length thereof is varied depending on the subcarrier spacing.

NR defines a basic unit of scheduling as a slot and also introduces a minislot (or a subslot or a non-slot-based schedule) in order to reduce a transmission delay of a radio section. If wide subcarrier spacing is used, the length of one slot is shortened in inverse proportion thereto, thereby reducing a transmission delay in the radio section. A minislot (or subslot) is intended to efficiently support URLLC scenarios, and the minislot may be scheduled in 2, 4, or 7 symbol units.

In addition, unlike LTE, NR defines uplink and downlink resource allocation as a symbol level in one slot. In order to reduce a HARQ delay, the slot structure capable of directly transmitting HARQ ACK/NACK in a transmission slot has been defined. Such a slot structure is referred to as a "self-contained structure", which will be described.

NR was designed to support a total of 256 slot formats, and 62 slot formats thereof are used in 3GPP Rel-15. In addition, NR supports a common frame structure constituting an FDD or TDD frame through combinations of various slots. For example, NR supports i) a slot structure in which all symbols of a slot are configured for a downlink, ii) a slot structure in which all symbols are configured for an uplink, and iii) a slot structure in which downlink symbols and uplink symbols are mixed. In addition, NR supports data transmission that is scheduled to be distributed to one or more slots. Accordingly, the base station may inform the UE of whether the slot is a downlink slot, an uplink slot, or a flexible slot using a slot format indicator (SFI). The base station may inform a slot format by instructing, using the SFI, the index of a table configured through UE-specific RRC signaling. Further, the base station may dynamically instruct the slot format through downlink control information (DCI) or may statically or quasi-statically instruct the same through RRC signaling.

### <Physical Resources of NR>

With regard to physical resources in NR, antenna ports, resource grids, resource elements, resource blocks, bandwidth parts, and the like are taken into consideration.

The antenna port is defined to infer a channel carrying a symbol on an antenna port from the other channel carrying another symbol on the same antenna port. If large-scale properties of a channel carrying a symbol on an antenna port can be inferred from the other channel carrying a symbol on another antenna port, the two antenna ports may have a quasi-co-located or quasi-co-location (QC/QCL) relationship. The large-scale properties include at least one of delay spread, Doppler spread, a frequency shift, an average received power, and a received timing.

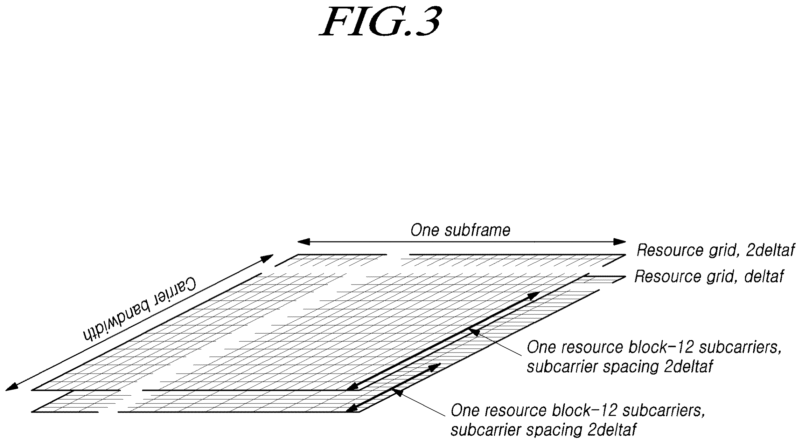

FIG. 3 illustrates resource grids supported by a radio access technology in accordance with embodiments of the present disclosure.

Referring to FIG. 3, resource grids may exist according to respective numerologies because NR supports a plurality of numerologies in the same carrier. In addition, the resource grids may exist depending on antenna ports, subcarrier spacing, and transmission directions.

A resource block includes 12 subcarriers and is defined only in the frequency domain. In addition, a resource element includes one OFDM symbol and one subcarrier. Therefore, as shown in FIG. 3, the size of one resource block may be varied according to the subcarrier spacing. Further, "Point A" that acts as a common reference point for the resource block grids, a common resource block, and a virtual resource block are defined in NR.

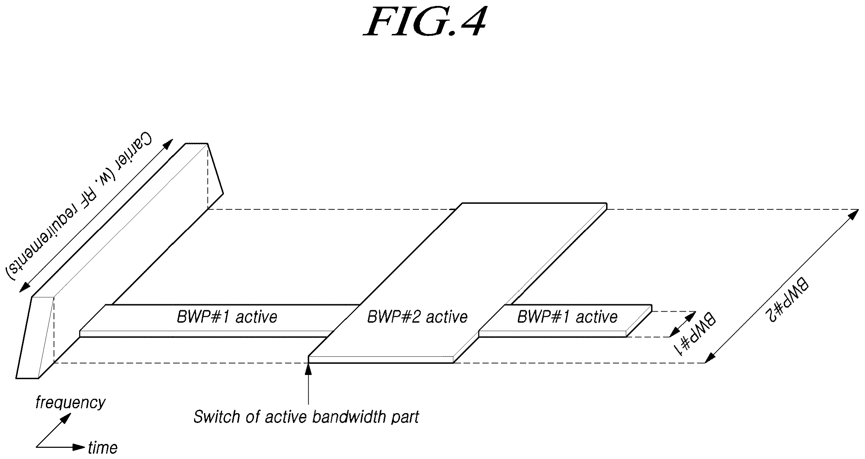

FIG. 4 illustrates bandwidth parts supported by a radio access technology in accordance with embodiments of the present disclosure.

Unlike LTE in which the carrier bandwidth is fixed to 20 MHz, the maximum carrier bandwidth is configured as 50 MHz to 400 MHz depending on the subcarrier spacing in NR. Therefore, it is not assumed that all UEs use the entire carrier bandwidth. Accordingly, as shown in FIG. 4, bandwidth parts (BWPs) may be specified within the carrier bandwidth in NR so that the UE may use the same. In addition, the bandwidth part may be associated with one numerology, may include a subset of consecutive common resource blocks, and may be activated dynamically over time. The UE has up to four bandwidth parts in each of the uplink and the downlink. The UE transmits and receives data using an activated bandwidth part during a given time.

In the case of a paired spectrum, uplink and downlink bandwidth parts are configured independently. In the case of an unpaired spectrum, in order to prevent unnecessary frequency re-tuning between a downlink operation and an uplink operation, the downlink bandwidth part and the uplink bandwidth part are configured in pairs to share a center frequency.

### <Initial Access in NR>

In NR, a UE performs a cell search and a random access procedure in order to access and communicates with a base station.

The cell search is a procedure of the UE for synchronizing with a cell of a corresponding base station using a synchronization signal block (SSB) transmitted from the base station and acquiring a physical-layer cell ID and system information.

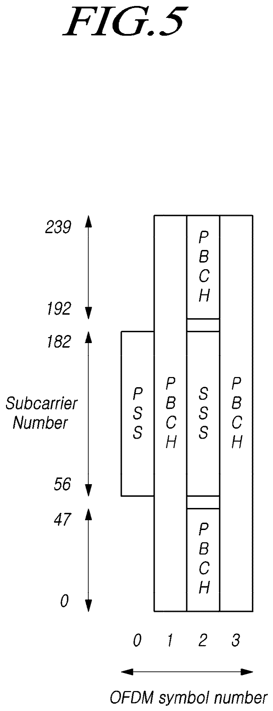

FIG. 5 illustrates an example of a synchronization signal block in a radio access technology in accordance with embodiments of the present disclosure.

Referring to FIG. 5, the SSB includes a primary synchronization signal (PSS) and a secondary synchronization signal (SSS), which occupy one symbol and 127 subcarriers, and PBCHs spanning three OFDM symbols and 240 subcarriers.

The UE monitors the SSB in the time and frequency domain, thereby receiving the SSB.

The SSB may be transmitted up to 64 times for 5 ms. A plurality of SSBs are transmitted by different transmission beams within a time of 5 ms, and the UE performs detection on the assumption that the SSB is transmitted every 20 ms based on a specific beam used for transmission. The number of beams that may be used for SSB transmission within 5 ms may be increased as the frequency band is increased. For example, up to 4 SSB beams may be transmitted at a frequency band of 3 GHz or less, and up to 8 SSB beams may be transmitted at a frequency band of 3 to 6 GHz. In addition, the SSBs may be transmitted using up to 64 different beams at a frequency band of 6 GHz or more.

One slot includes two SSBs, and a start symbol and the number of repetitions in the slot are determined according to subcarrier spacing as follows.

Unlike the SS in the typical LTE system, the SSB is not transmitted at the center frequency of a carrier bandwidth. That is, the SSB may also be transmitted at the frequency other than the center of the system band, and a plurality of SSBs may be transmitted in the frequency domain in the case of supporting a broadband operation. Accordingly, the UE monitors the SSB using a synchronization raster, which is a candidate frequency position for monitoring the SSB. A carrier raster and a synchronization raster, which are the center frequency position information of the channel for the initial connection, were newly defined in NR, and the synchronization raster may support a fast SSB search of the UE because the frequency spacing thereof is configured to be wider than that of the carrier raster.

The UE may acquire an MIB over the PBCH of the SSB. The MIB (master information block) includes minimum information for the UE to receive remaining minimum system information (RMSI) broadcast by the network. In addition, the PBCH may include information on the position of the first DM-RS symbol in the time domain, information for the UE to monitor SIB1 (e.g., SIB1 numerology information, information related to SIB1 CORESET, search space information, PDCCH-related parameter information, etc.), offset information between the common resource block and the SSB (the position of an absolute SSB in the carrier is transmitted via SIB1), and the like. The SIB1 numerology information is also applied to some messages used in the random access procedure for the UE to access the base station after completing the cell search procedure. For example, the numerology information of SIB1 may be applied to at least one of the messages 1 to 4 for the random access procedure.

The above-mentioned RMSI may mean SIB1 (system information block 1), and SIB1 is broadcast periodically (e.g., 160 ms) in the cell. SIB1 includes information necessary for the UE to perform the initial random access procedure, and SIB1 is periodically transmitted over a PDSCH. In order to receive SIB1, the UE must receive numerology information used for the SIB1 transmission and the CORESET (control resource set) information used for scheduling of SIB1 over a PBCH. The UE identifies scheduling information for SIB1 using SI-RNTI in the CORESET. The UE acquires SIB1 on the PDSCH according to scheduling information. The remaining SIBs other than SIB1 may be periodically transmitted, or the remaining SIBs may be transmitted according to the request of the UE.

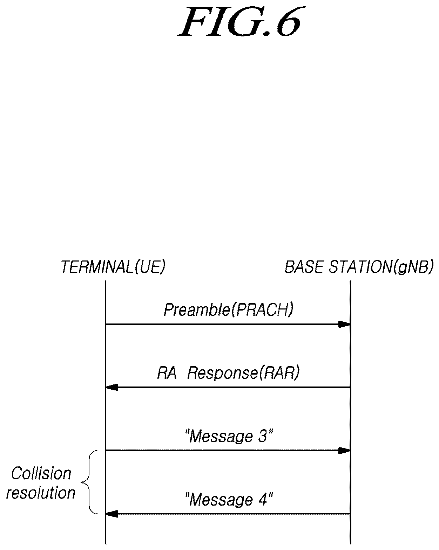

FIG. 6 is a view for explaining a random access procedure in a radio access technology.

Referring to FIG. 6, if a cell search is completed, the UE transmits a random access preamble for random access to the base station. The random access preamble is transmitted over a PRACH. Specifically, the random access preamble is periodically transmitted to the base station over the PRACH that includes consecutive radio resources in a specific slot repeated. In general, a contention-based random access procedure is performed when the UE makes initial access to a cell, and a non-contention-based random access procedure is performed when the UE performs random access for beam failure recovery (BFR).

The UE receives a random access response to the transmitted random access preamble. The random access response may include a random access preamble identifier (ID), UL Grant (uplink radio resource), a temporary C-RNTI (temporary cell-radio network temporary identifier), and a TAC (time alignment command). Since one random access response may include random access response information for one or more UEs, the random access preamble identifier may be included in order to indicate the UE for which the included UL Grant, temporary C-RNTI, and TAC are valid. The random access preamble identifier may be an identifier of the random access preamble received by the base station. The TAC may be included as information for the UE to adjust uplink synchronization. The random access response may be indicated by a random access identifier on the PDCCH, i.e., a random access-radio network temporary identifier (RA-RNTI).

Upon receiving a valid random access response, the UE processes information included in the random access response and performs scheduled transmission to the base station. For example, the UE applies the TAC and stores the temporary C-RNTI. In addition, the UE transmits, to the base station, data stored in the buffer of the UE or newly generated data using the UL Grant. In this case, information for identifying the UE must be included in the data.

Lastly, the UE receives a downlink message to resolve the contention.

### <NR CORESET>

The downlink control channel in NR is transmitted in a CORESET (control resource set) having a length of 1 to 3 symbols, and the downlink control channel transmits uplink/downlink scheduling information, an SFI (slot format index), TPC (transmit power control) information, and the like.

As described above, NR has introduced the concept of CORESET in order to secure the flexibility of a system. The CORESET (control resource set) refers to a time-frequency resource for a downlink control signal. The UE may decode a control channel candidate using one or more search spaces in the CORESET time-frequency resource. CORESET-specific QCL (quasi-colocation) assumption is configured and is used for the purpose of providing information on the characteristics of analogue beam directions, as well as delay spread, Doppler spread, Doppler shift, and an average delay, which are the characteristics assumed by existing QCL.

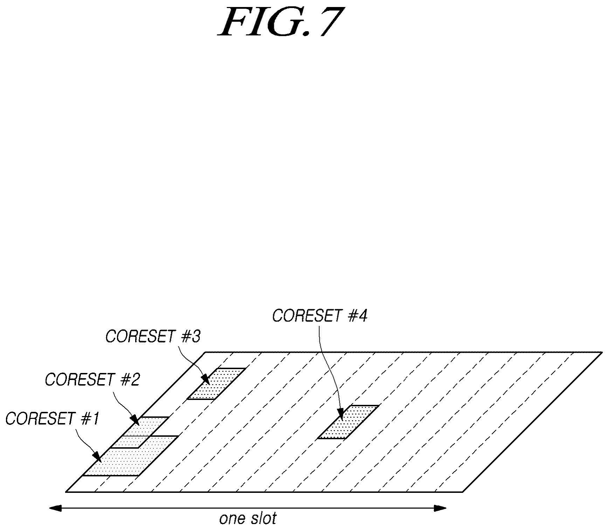

FIG. 7 illustrates CORESET.

Referring to FIG. 7, CORESETs may exist in various forms within a carrier bandwidth in a single slot, and the CORESET may include a maximum of 3 OFDM symbols in the time domain. In addition, the CORESET is defined as a multiple of six resource blocks up to the carrier bandwidth in the frequency domain.

A first CORESET, as a portion of the initial bandwidth part, is designated (e.g., instructed, assigned) through an MIB in order to receive additional configuration information and system information from a network. After establishing a connection with the base station, the UE may receive and configure one or more pieces of CORESET information through RRC signaling.

### Wider bandwidth operations

The typical LTE system supports scalable bandwidth operations for any LTE CC (component carrier). That is, according to a frequency deployment scenario, an LTE provider may configure a bandwidth of a minimum of 1.4 MHz to a maximum of 20 MHz in configuring a single LTE CC, and a normal LTE UE supports a transmission/reception capability of a bandwidth of 20 MHz for a single LTE CC.

However, the NR is designed to support the UE of NR having different transmission/reception bandwidth capabilities over a single wideband NR CC. Accordingly, it is required to configure one or more bandwidth parts (BWPs) including subdivided bandwidths for an NR CC, thereby supporting a flexible and wider bandwidth operation through configuration and activation of different bandwidth parts for respective UEs.

Specifically, one or more bandwidth parts may be configured through a single serving cell configured for a UE in NR, and the UE is defined to activate one downlink (DL) bandwidth part and one uplink (UL) bandwidth part to use the same for uplink/downlink data transmission/reception in the corresponding serving cell. In addition, in the case where a plurality of serving cells is configured for the UE (i.e., the UE to which CA is applied), the UE is also defined to activate one downlink bandwidth part and/or one uplink bandwidth part in each serving cell to use the same for uplink/downlink data transmission/reception by utilizing radio resources of the corresponding serving cell.

Specifically, an initial bandwidth part for an initial access procedure of a UE may be defined in a serving cell; one or more UE-specific bandwidth parts may be configured for each UE through dedicated RRC signaling, and a default bandwidth part for a fallback operation may be defined for each UE.

It is possible to define simultaneously activating and using a plurality of downlink and/or uplink bandwidth parts according to the capability of the UE and the configuration of the bandwidth parts in a serving cell. However, NR rel-15 defined activating and using only one downlink (DL) bandwidth part and one uplink (UL) bandwidth part at a time.

In this specification, a frequency, a frame, a subframe, a resource, a resource block, a region, a band, a subband, a control channel, a data channel, a synchronization signal, various reference signals, various signals, or various messages in relation to NR (New Radio) may be interpreted as meanings used at present or in the past or as various meanings to be used in the future.

Hereinafter, a method for a UE to receive a downlink data channel in full-duplex communication is described with reference to the accompanying drawings.

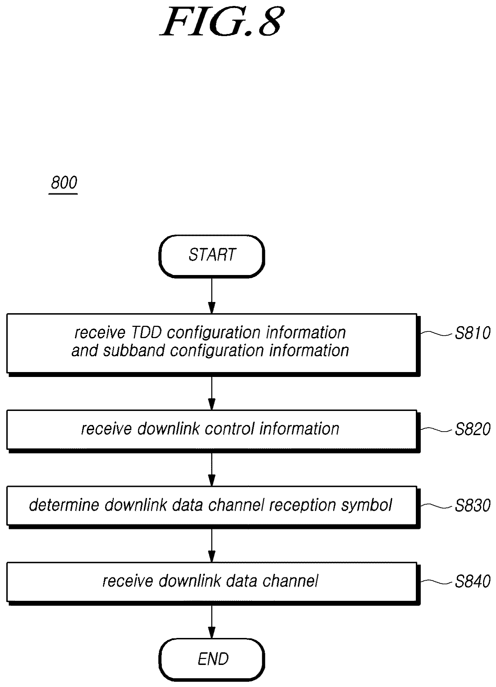

FIG. 8 is a flowchart illustrating a method 800 of receiving a downlink data channel by a UE according to an embodiment.

Referring to FIG. 8, the UE may receive time division duplex (TDD) configuration information and subband configuration information (S810).

The time division duplex (TDD) uses time-domain radio resources by dividing them to downlink and uplink slots, and the UE may receive the TDD configuration information from the base station to determine the format of the symbol within a slot. In this case, the TDD configuration information may include configuration information about the format of the slot and configuration information for determining the symbol format within the slot, and the corresponding information may be received through higher layer signaling or physical layer L1 signaling.

In other words, a downlink symbol, an uplink symbol, and a flexible symbol of a predetermined period in which the transmission direction is not determined may be configured through an RRC message for configuring a corresponding UL-DL slot. Further, the UE may receive UE-specific RRC signaling that reallocates flexible symbols, among symbols configured through cell-specific RRC signaling, to uplink symbols, downlink symbols, or flexible symbols for each UE.

Alternatively, the UE may receive an indication of a dynamic slot format through a UE-group common PDCCH. According to an embodiment, the UE may dynamically receive the slot format through DCI format 2_0.

Full-duplex communication is a technique in which the base station simultaneously performs downlink transmission and uplink reception in the same radio resource. The UE may also simultaneously perform downlink reception and uplink transmission. When the base station supports full-duplex communication based on subband non-overlapping, a specific frequency resource in the same symbol of a TDD carrier may be used for downlink transmission, and another frequency resource may be used for uplink reception. In other words, for a TDD carrier, some frequency resources may be utilized for uplink transmission of the UE in a downlink slot or downlink symbol, or may be utilized as a flexible symbol for downlink/uplink transition.

To that end, the UE may receive subband configuration information for full-duplex communication. In other words, the UE may receive configuration information for configuring a downlink subband in an uplink slot or an uplink subband in a downlink slot. The subband configuration information may include time-domain information and frequency-domain information where an uplink subband or a downlink subband is configured. Alternatively, the subband configuration information may include frequency-domain and time-domain information about in which a guard band is configured.

The subband configuration information may be transmitted through a broadcasting scheme transmitted to all the UEs in the cell. Alternatively, it may be transmitted through a multicasting scheme that transmits to UEs requiring a full-duplex communication mode operation or a unicasting scheme that transmits only to a specific UE. The UE may receive the corresponding configuration information according to the configured scheme.

For example, when an uplink subband is configured in a downlink slot, the uplink subband may be set at the center of the corresponding frequency band or at the edge of the corresponding frequency band. In this case, a guard band may be configured between the uplink subband and downlink subband (e.g., the remaining frequency band other than the uplink subband and guard band among the frequency bands allocated to the UE) in the corresponding slot.

As such, a downlink slot or symbol including an uplink subband and an uplink slot or symbol including a downlink subband is defined as a subband full duplex (SBFD) slot or SBFD symbol in the disclosure. However, the term SBFD is for convenience of description, and the scope of this disclosure is not limited thereto and may alternatively be expressed using other terms. Further, a slot that is not an SBFD slot, i.e., a slot without subbands configured for different transmission directions, may be referred to as a non-SBFD slot.

In other words, a downlink slot or downlink symbol configured for the UE may include an SBFD symbol in which an uplink subband is configured for full-duplex communication. That is, an uplink subband may be configured for at least some of the downlink slots or downlink symbols configured for the UE, and in this case, an uplink subband, a downlink subband, and/or a guard band may be configured for the corresponding slot or symbol.

Similarly, an uplink slot or uplink symbol configured for the UE may include an SBFD symbol in which a downlink subband is configured for full-duplex communication. That is, a downlink subband may be configured for at least some of the uplink slots or uplink symbols configured for the UE, and in this case, an uplink subband, a downlink subband, and/or a guard band may be configured for the corresponding slot or symbol.

Referring to FIG. 8 again, the UE may receive downlink control information including resource allocation information for a PDSCH scheduled across a plurality of slots (S820) and may determine at least one symbol for receiving the PDSCH in each of the plurality of slots based on the downlink control information (S830).

The UE may receive downlink resource allocation information including time resources and frequency resources for receiving a physical downlink shared channel (PDSCH) from a base station. According to an embodiment, the UE may receive resource allocation information for receiving a PDSCH scheduled in a plurality of slots by one DCI format.

In other words, the UE may receive downlink control information from a base station that allocates PDSCH reception resources across a plurality of slots. Here, PDSCH reception through a plurality of slots may mean a DCI format for receiving a PDSCH with*pdsch-AggregationFactor* configured, or a DCI format including multi-PDSCH scheduling information.

The UE may determine at least one symbol allocated for PDSCH reception in each of the plurality of slots based on resource allocation information in the downlink control information. In other words, the UE may identify symbol positions for receiving a PDSCH for each of the plurality of slots according to resource allocation information in the downlink control information. In the disclosure, the at least one symbol for receiving the PDSCH may be referred to as PDSCH reception symbols. However, it is understood that this terminology is not limiting.

Referring to FIG. 8 again, the UE may receive a PDSCH based on whether the at least one symbol includes a subband full duplex (SBFD) symbol configured under the TDD configuration information and the subband configuration information (S840).

According to an embodiment, the UE may receive a PDSCH only in slots where all of the at least one symbol are SBFD symbols, or receive a PDSCH only in slots where all of the at least one symbol are non-SBFD symbols, among the plurality of slots according to the downlink control information. In other words, for each of the plurality of slots, it may be configured such that a PDSCH is received only in slots where all PDSCH reception symbols are configured as SBFD symbols, or only in slots where all PDSCH reception symbols are configured as non-SBFD symbols.

Specifically, when configured to receive a PDSCH only in slots where all PDSCH reception symbols are configured as non-SBFD symbols, the UE may not receive a PDSCH in the corresponding slot when the PDSCH reception symbols are indicated as UL by *tdd-UL-DL-ConfigurationCommon* or *tdd-UL-DL-ConfigurationDedicated,* or when the PDSCH reception symbols are SBFD symbols with a uplink subband configuration.

Alternatively, when the UE is configured to receive a PDSCH only in slots where all PDSCH reception symbols are configured as SBFD symbols, the UE may not receive a PDSCH in the corresponding slot when the PDSCH reception symbols are indicated as UL by *tdd-UL-DL-ConfigurationCommon* or *tdd-UL-DL-ConfigurationDedicated,* or when they are DL symbols or flexible symbols without subband configuration, or when they are SBFD symbols configured or indicated by the base station to explicitly perform uplink transmission.

For example, it is assumed that a PDSCH is scheduled through L+M+N slots. Here, L is the number of slots where all PDSCH reception symbols are SBFD symbols, M is the number of slots where all PDSCH reception symbols are non-SBFD symbols, and N is the number of slots where PDSCH reception symbols include both SBFD symbols and non-SBFD symbols. In this case, the UE may receive a PDSCH through L slots or through M slots.

In this case, according to one embodiment, the type of symbol for receiving the PDSCH may be configured or indicated by the base station, determined by the type of symbol in which the downlink control information is received, or determined by the symbol type of the first slot among the plurality of slots. In other words, whether to receive the PDSCH only when all PDSCH reception symbols are SBFD symbol type or only when all are non-SBFD symbol type may be determined by the above-described method.

According to an embodiment, the UE may receive a PDSCH in slots where all of symbols are SBFD symbols and slots where all symbols are non-SBFD symbols, among the plurality of slots according to the downlink control information. In other words, for each of the plurality of slots, it may be configured such that a PDSCH is received in both slots where all PDSCH reception symbols are configured as SBFD symbols and in slots where all PDSCH reception symbols are configured as non-SBFD symbols.

As described above, e.g., it is assumed that a PDSCH is scheduled through L+M+N slots. Here, L is the number of slots where all PDSCH reception symbols are SBFD symbols, M is the number of slots where all PDSCH reception symbols are non-SBFD symbols, and N is the number of slots where PDSCH reception symbols include both SBFD symbols and non-SBFD symbols. In this case, the UE may receive a PDSCH through L+M slots.

In this case, according to one embodiment, the UE may not receive a PDSCH in slots where at least one of the PDSCH reception symbols is configured or indicated by the base station, among slots where all of the at least one symbol are SBFD symbols.

Specifically, the UE may not receive a PDSCH in the corresponding slot when the PDSCH reception symbols are indicated as UL by *tdd-UL-DL-ConfigurationCommon* or *tdd-UL-DL-ConfigurationDedicated,* or when the PDSCH reception symbols are SBFD symbols with a UL subband configuration, where UL transmission is configured through RRC signaling or indicated through a DCI format by the base station in the corresponding symbol.

Further, according to one embodiment, the UE may not receive a PDSCH in slots where frequency resources allocated according to frequency domain resource allocation (FDRA) in the downlink control information are not completely contained within the frequency domain of a downlink subband, among slots where all of the at least one symbol are SBFD symbols.

In other words, frequency resources for PDSCH reception according to FDRA included in the corresponding DCI format may be limited to fully fall within the frequency resources of the downlink subband. Alternatively, the corresponding DCI format may include scheduling control information in non-SBFD slots and separate scheduling control information in SBFD slots. In this case, e.g., FDRA, transmission configuration indicator (TCI) fields, etc. may be separately configured in non-SBFD slots and SBFD slots and included in one downlink control information. Alternatively, in SBFD symbols, frequency regions outside the downlink subband among allocated PDSCH frequency resources may be punctured or rate matched for reception.

According to the embodiments described above, a downlink data channel may be efficiently transmitted and received within slots or symbols where full-duplex communication is applied.

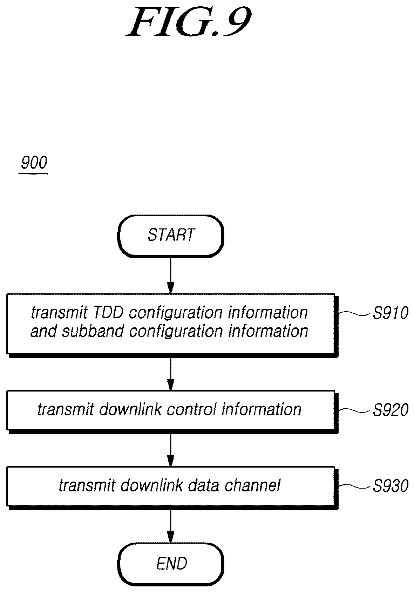

FIG. 9 is a flowchart illustrating a method 900 for a base station to transmit a downlink data channel according to an embodiment. The description described above in FIG. 8 may be omitted to avoid redundant description, and the omitted content may still be substantially applied to the base station, provided that it does not conflict with the technical spirit of the disclosure.

Referring to FIG. 9, the base station may transmit time division duplex (TDD) configuration information and subband configuration information (S910).

Time division duplex (TDD) is a method of using time-domain radio resources by dividing them into downlink slots and uplink slots, and the base station may transmit TDD configuration information to the UE to determine the format of symbols within a slot. In this case, the TDD configuration information may include configuration information about the format of the slot and configuration information for determining the symbol format within the slot, and the corresponding information may be received through higher layer signaling or physical layer L1 signaling.

In other words, a downlink symbol, an uplink symbol, and a flexible symbol of a predetermined period in which the transmission direction is not determined may be configured through an RRC message for configuring a corresponding UL-DL slot. Further, the base station may transmit UE-specific RRC signaling that reallocates flexible symbols, among those configured through cell-specific RRC signaling, to uplink symbols, downlink symbols, or flexible symbols for each UE.

Alternatively, the base station may indicate a dynamic slot format through a UE-group common PDCCH. According to an embodiment, the base station may dynamically indicate the slot format through DCI format 2_0.

The base station may transmit subband configuration information for full-duplex communication to the UE. In other words, the base station may transmit configuration information for configuring a downlink subband in an uplink slot or an uplink subband in a downlink slot. The subband configuration information may include time-domain information and frequency-domain information where an uplink subband or a downlink subband is configured. Alternatively, the subband configuration information may include frequency-domain and time-domain information in which a guard band is configured.

The subband configuration information may be transmitted through a broadcasting scheme transmitted to all the UEs in the cell. Alternatively, it may be transmitted through a multicasting scheme that transmits to UEs requiring a full-duplex communication mode operation or a unicasting scheme that transmits only to a specific UE. The base station may transmit the corresponding configuration information according to the configured method.

In other words, a downlink slot or a downlink symbol configured for the UE may include an SBFD symbol in which an uplink subband is configured for full-duplex communication. In other words, an uplink subband may be configured for at least some of the downlink slots or downlink symbols configured for the UE, and in this case, an uplink subband, a downlink subband, and/or a guard band may be configured for the corresponding slot or symbol.

Similarly, an uplink slot or uplink symbol configured for the UE may include an SBFD symbol in which a downlink subband is configured for full-duplex communication. That is, a downlink subband may be configured for at least some of the uplink slots or uplink symbols configured for the UE, and in this case, an uplink subband, a downlink subband, and/or a guard band may be configured for the corresponding slot or symbol.

Referring to FIG. 9 again, the base station may transmit downlink control information including resource allocation information for a PDSCH scheduled across a plurality of slots (S920).

The base station may transmit downlink resource allocation information including time resources and frequency resources for receiving a physical downlink shared channel (PDSCH) to the UE. According to an embodiment, the base station may transmit resource allocation information for receiving a PDSCH scheduled in a plurality of slots by one DCI format.

In other words, the base station may transmit downlink control information allocated with PDSCH reception resources through a plurality of slots to the UE. Here, PDSCH transmission through a plurality of slots may mean a DCI format for transmitting a PDSCH with *pdsch-AggregationFactor* configured, or a DCI format including multi-PDSCH scheduling information.

The UE may determine at least one symbol allocated for PDSCH reception in each of the plurality of slots based on resource allocation information in the downlink control information. In other words, the UE may identify symbol positions for receiving a PDSCH for each of the plurality of slots according to resource allocation information in the downlink control information. In this disclosure, the at least one symbol for the UE to receive a PDSCH may be referred to as PDSCH reception symbols. Hereinafter, to avoid confusion, the same terminology, "PDSCH reception symbols," is also used in the description with respect to the base station.

Referring to FIG. 9 again, the base station may transmit a PDSCH based on whether at least one symbol for transmitting the PDSCH in each of the plurality of slots includes a subband full duplex (SBFD) symbol configured under the TDD configuration information and the subband configuration information (S930).

According to an embodiment, the base station may transmit a PDSCH only in slots where all of the at least one symbol is SBFD symbols, or transmit a PDSCH only in slots where all of the at least one symbol is non-SBFD symbols, among the plurality of slots according to the downlink control information. In other words, for each of the plurality of slots, it may be configured such that a PDSCH is transmitted only in slots where all PDSCH reception symbols are configured as SBFD symbols, or only in slots where all PDSCH reception symbols are configured as non-SBFD symbols.

Specifically, when configured to receive a PDSCH only in slots where all PDSCH reception symbols are configured as non-SBFD symbols, the base station may not transmit a PDSCH in the corresponding slot when the PDSCH reception symbols are indicated as UL by *tdd-UL-DL-ConfigurationCommon* or *tdd-UL-DL-ConfigurationDedicated,* or when the PDSCH reception symbols are SBFD symbols with a uplink subband configuration.

Alternatively, when configured to receive a PDSCH only in slots where all PDSCH reception symbols are configured as SBFD symbols, the base station may not transmit a PDSCH in the corresponding slot when the PDSCH reception symbols are indicated as UL by *tdd-UL-DL-ConfigurationCommon* or *tdd-UL-DL-ConfigurationDedicated,* or when they are DL symbols or flexible symbols without subband configuration, or when they are SBFD symbols configured or indicated by the base station to explicitly perform uplink transmission.

In this case, according to one embodiment, the type of symbol for receiving the PDSCH may be configured or indicated by the base station, determined by the type of symbol through which the downlink control information is received, or determined by the symbol type of the first slot among the plurality of slots. In other words, whether to receive the PDSCH only when all PDSCH reception symbols are SBFD symbol type or only when all are non-SBFD symbol type may be determined by the above-described method.

According to an embodiment, the base station may transmit a PDSCH in slots where all symbols are SBFD symbols (e.g., slots having all SBFD symbols) and slots where all symbols are non-SBFD symbols (e.g., slots having all non-SBFD symbols), among the plurality of slots according to the downlink control information. In other words, for each of the plurality of slots, it may be configured such that a PDSCH is transmitted in slots where all PDSCH reception symbols are configured as SBFD symbols and in slots where all PDSCH reception symbols are configured as non-SBFD symbols.

In this case, according to one embodiment, the base station may not transmit a PDSCH in slots where at least one of the PDSCH reception symbols is configured or indicated by the base station for uplink transmission, among slots where all of the at least one symbol is SBFD symbols.

Specifically, the base station may not transmit a PDSCH in the corresponding slot when the PDSCH reception symbols are indicated as UL by *tdd-UL-DL-ConfigurationCommon* or *tdd-UL-DL-ConfigurationDedicated,* or when the PDSCH reception symbols are SBFD symbols with a uplink subband configuration, where UL transmission is configured through RRC signaling or indicated through a DCI format by the base station in the corresponding symbol.

Further, according to one example, the base station may not transmit a PDSCH in slots where frequency resources allocated according to frequency domain resource allocation (FDRA) in the downlink control information are not completely contained within the frequency domain of a downlink subband, among slots where all of the at least one symbol are SBFD symbols.

In other words, frequency resources for PDSCH transmission according to FDRA included in the corresponding DCI format may be limited to fully fall within the frequency resources of the downlink subband. Alternatively, the corresponding DCI format may include scheduling control information in non-SBFD slots and separate scheduling control information in SBFD slots. In this case, e.g., FDRA, transmission configuration indicator (TCI) fields, etc. may be separately configured in non-SBFD slots and SBFD slots and included in one downlink control information. Alternatively, in SBFD symbols, frequency regions outside the downlink subband among allocated PDSCH frequency resources may be punctured or rate matched for reception.

According to the embodiments described above, a downlink data channel may be efficiently transmitted and received within slots or symbols where full-duplex communication is applied.

Hereinafter, with reference to the accompanying drawings, each embodiment related to a method for transmitting/receiving a downlink data channel in full-duplex communication is described in detail.

The disclosure proposes a method for transmitting/receiving a downlink data channel, i.e., a PDSCH, between the base station and the UE in any base station/cell where an uplink subband (UL subband) or a downlink subband (DL subband) is configured to support full duplex in a wireless mobile communication system. In particular, when an arbitrary UE is configured to schedule one or more PDSCH transmissions and receptions through one DCI, a method for multiple PDSCH transmission/reception in an SBFD slot including a DL subband and a non-SBFD slot (e.g., an existing UL slot) is proposed.

Time division duplex (TDD) is a duplexing method widely used in commercial new radio (NR), i.e., 5G mobile communication systems. In TDD, time-domain radio resources are divided into downlink slots and uplink slots, and downlink slots are usually allocated in greater proportion than uplink slots according to the distribution ratio of uplink traffic and downlink traffic. However, this limitation of the uplink slots adversely affects coverage and latency. Full-duplex communication may be applied as a technology to address these issues.

Full-duplex communication is a technology for simultaneously performing transmission/reception using the same time and frequency resources, and a method may be applied by simultaneously performing downlink (DL) transmission and uplink (UL) reception from the perspective of the base station (gNB in the case of 5G). However, from the perspective of the UE, DL reception and UL transmission may also be performed simultaneously. In other words, both the base station and the UE may support full duplex. However, unlike the base station, for which self-interference cancellation is structurally advantageous, the DL reception performance of the UE is susceptible to self-interference from UL transmission signals. Therefore, it is generally considered that the base station operates in full-duplex communication and the UE operates in half-duplex communication. Further, to reduce the influence of self-interference even at a base station, a subband non-overlapping full duplex method may be primarily considered, in which the base station performs DL transmission and UL reception simultaneously while separating frequency resources between DL/UL for transmission/reception.

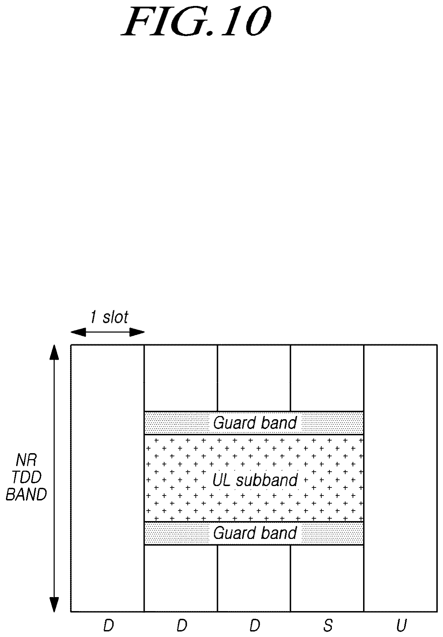

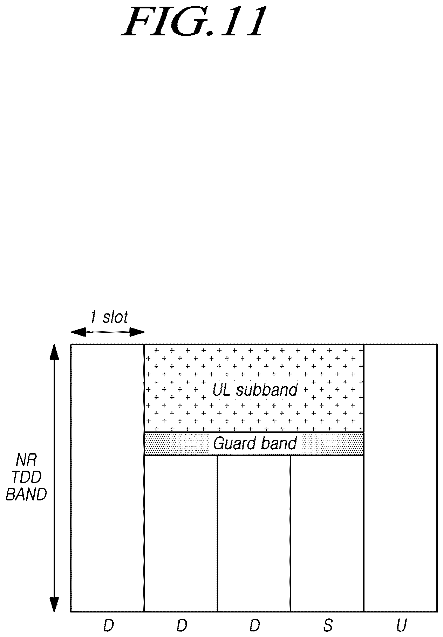

In other words, FIGS. 10 and 11 illustrate an example in which DL slots and UL slots are configured in a ratio of 4:1 in an NR frequency band. However, some symbols of the last DL slot may be a special slot including a flexible symbol for DL/UL transition. As described above, when a time division duplex (TDD) configuration is implemented, an uplink subband for supporting UL transmission of the UE may be configured in some (or all) DL slots of the corresponding DL slots. When a UL subband is configured in an arbitrary DL slot, as illustrated in FIG. 10, the corresponding UL subband may be configured at the center of the corresponding frequency band, or as illustrated in FIG. 11, it may be configured at the edge of the corresponding frequency band. In this case, a guard band may be configured between the UL subband and the downlink subband (DL subband) in the corresponding slot. Further, the remaining frequency resources, except for the UL subband and guard band, may be utilized as a DL subband for DL transmission/reception according to existing slot/symbol configuration information. In other words, as illustrated in FIG. 10, when a UL subband configuration is made at the center of the frequency band, a total of 2 guard bands may be configured, one each at the upper and lower portions of the UL subband, and likewise, a total of 2 DL subbands may be configured, one each at the upper and lower parts. Alternatively, as illustrated in FIG. 11, when a UL subband configuration is made at the edge of the frequency band, one guard band and one DL subband may be configured following the corresponding UL subband.

The disclosure proposes a method for BWP configuration when an arbitrary base station/network supports sub band non-overlapping full duplex, and accordingly, a method for transmitting/receiving uplink/downlink wireless signals (DM-RS, CSI-RS, SRS, PSS/SSS, etc.) and wireless channels (e.g., PDCCH/PDSCH and PUSCH/PUCCH, etc.) between the base station and the UE. However, the description of the disclosure may be applied in substantially the same manner to other various full-duplex application scenarios. For example, the full duplex application scenario may include a full duplex operation in an unpaired spectrum and a full duplex operation in a downlink (DL) frequency band or an uplink (UL) frequency band of a paired spectrum. Further, as described above, the description of the disclosure may be applied in substantially the same manner to a scenario in which subband non-overlapping full duplex or pure full duplex (i.e., DL transmission and UL reception simultaneously in the same frequency resource) is supported only on the base station side, and the UE operates in half duplex mode. Further, the description of the disclosure may be applied in substantially the same manner even when not only the base station but also the UE supports subband non-overlapping full duplex or pure full duplex.

The uplink-downlink (UL-DL) slot configuration defined in NR is configured on a per-cell basis through cell-specific RRC signaling. In other words, patterns of DL symbols, UL symbols, and flexible symbols of a predetermined period are configured through the RRC message 'tdd-UL-DL-ConfigurationCommon' for the corresponding UL-DL slot configuration. Additionally, through 'tdd-UL-DL-ConfigurationDedicated' which is UE-specific RRC signaling, only flexible symbols configured through the 'tdd-UL-DL-ConfigurationCommon' may be reallocated as UL symbols, DL symbols, or flexible symbols for each UE. Alternatively, NR defines a dynamic slot format indication method through a UE-group common PDCCH. To that end, NR also supports a dynamic slot format indication via DCI format 2_0.

According to the above-described slot configuration method, any one symbol may be configured or indicated as one of DL, UL, or Flexible. FIG. 10 illustrates an example in which a slot format is set as DDDSU through the typical slot configuration. D is a downlink slot, in which all OFDM symbols constituting the corresponding slot are set as DL. U is an uplink slot, in which all OFDM symbols constituting the corresponding slot are set as UL. S is a special slot that includes a flexible symbol for DL/UL transition. In general, the special slot may be composed of 12 DL symbols and 2 flexible symbols out of a total of 14 symbols for a normal CP. Alternatively, it may be composed of 10 DL symbols, 2 flexible symbols, and 2 UL symbols. In other words, within a TDD carrier, one symbol is configured or indicated as only one of DL, UL, or flexible.

However, when the UL subband is configured in a DL slot as shown in FIGS. 10 and 11, DL transmission or UL transmission may occur simultaneously for each frequency resource in the corresponding symbol. As described above, a DL slot or symbol including a UL subband or a UL slot or symbol including a DL subband is referred to as an SBFD slot or an SBFD symbol in the disclosure.

Further, in the disclosure, a slot composed only of SBFD symbols is referred to as an SBFD slot, and a slot composed only of symbols according to existing symbol configuration (i.e., a slot composed only of symbols that do not include UL subband, DL subband, and guard band) is referred to as a non-SBFD slot.

Alternatively, a slot including one or more SBFD symbols may be referred to as an SBFD slot.

According to the PDSCH transmission/reception method of the base station and the UE defined in existing 5G NR, NR supports dynamic scheduling-based PDSCH transmission/reception through downlink assignment DCI (downlink control information) transmitted via PDCCH and semi-persistent PDSCH transmission/reception through RRC message SPS-config.

The above-described dynamic scheduling-based PDSCH transmission/reception basically involves DCI format transmission for resource allocation (e.g., DCI format 1_0, 1_1, 1_2, etc.) for each PDSCH transmission on a slot or sub slot basis. PDSCH transmission is carried out by the base station based on resource allocation information included in the corresponding DCI format, and accordingly, the UE receives the corresponding PDSCH. Therefore, as described above, PDSCH transmission resource allocation in an SBFD slot composed of SBFD symbols and PDSCH transmission resource allocation in a non-SBFD slot such as a DL slot may be performed through separate DCI transmissions.

However, in the case of dynamic scheduling-based PDSCH transmission/reception, PDSCH transmission/reception in different types of slots may be triggered through one DCI. For example, this may include PDSCH repetition through radio resource control (RRC) parameter *pdsch-AggregationFactor* or *repetitionNumber* configuration, or cases where scheduling for multiple PDSCH transmissions is performed through one DCI.

In the disclosure, when arbitrary PDSCH transmission/reception with dynamic scheduling through one DCI is indicated for one or more slots, and the corresponding slots include both SBFD slots and non-SBFD slots, a method for defining specific PDSCH transmission/reception slots is proposed. In particular, when multi-PDSCH scheduling through one DCI is performed for an arbitrary UE, a method for determining slots in which the corresponding multi-PDSCH transmission/reception is performed is proposed.

Hereinafter, content described as transmission from the perspective of the base station may be applied to the reception operation of the UE, and content described as reception from the perspective of the base station may be applied to the transmission operation of the UE. Similarly, content described as reception from the perspective of the UE may be applied to the transmission operation of the base station, and content described as transmission from the perspective of the UE may be applied to the reception operation of the base station.

In the disclosure, the term 'slot type' is used to distinguish between SBFD slots and non-SBFD slots, but the disclosure is not limited thereto and other terminology may be used.

An NR base station may transmit scheduling control information for one or more PDSCH transmissions through one DL assignment DCI (e.g., DCI format 1_1) to an arbitrary UE. Specifically, the base station may configure a time domain resource allocation (TDRA) table in which one row has one or more start and length indicator values (SLIV) through RRC parameter *pdsch-TimeDomainAllocationListForMultiPDSCH* configuration, and based on this, may allocate each PDSCH transmission resource in one or more slots through time domain resource assignment indication information of DCI format 1_1.

Specifically, when an NR base station configures a TDRA table for an arbitrary UE for multi-PDSCH scheduling, it may configure K0 values, mapping type values, and SLIV values for each PDSCH.

Based on this, the base station may explicitly indicate slot (K0) and symbol (SLIV) allocation information within the corresponding slot for one or more PDSCH transmissions through DL assignment DCI such as DCI format 1_1. However, according to the existing UE's PDSCH reception method, when scheduling for PDSCH reception across multiple slots is performed by a single DCI format, if at least one symbols allocated for PDSCH reception in any of the plurality of slots is indicated as UL by *tdd-UL-DL-ConfigurationCommon* or *tdd-UL-DL-ConfigurationDedicated,* it is defined that the UE does not receive PDSCH in the corresponding slot.

Therefore, according to the existing multi-PDSCH scheduling method, even when PDSCH reception through a DL subband is possible by the UE in an arbitrary SBFD slot to which PDSCH transmission resources are allocated by the DL assignment DCI (e.g., DCI format 1_1, etc.) including the corresponding multi-PDSCH scheduling control information, if the corresponding slot has at least one or more symbols allocated for PDSCH reception set as UL by legacy slot configuration, PDSCH reception of the UE does not occur. Alternatively, even if symbols are configured or indicated as DL or flexible by legacy slot configuration, if a UL subband is configured for the corresponding symbol (i.e., the symbol is configured or indicated as an SBFD symbol by the base station), PDSCH reception may not be possible in the corresponding symbol according to the frequency domain resource assignment information for the corresponding PDSCH reception and the frequency resource allocation information of the UL subband. (In the disclosure, legacy slot configuration refers to slot configuration by the above-described *tdd-UL-DL-ConfigurationCommon* or *tdd-UL-DL-ConfigurationDedicated* as legacy slot configuration, or additionally includes dynamic slot format configuration by DCI format 2_0 as legacy slot configuration.)

Therefore, it is necessary to define a new PDSCH reception method according to multi-PDSCH scheduling to overcome the limitations.

Hereinafter, various methods for solving the problems are proposed. In particular, a method for PDSCH reception by the UE and PDSCH transmission by the base station is proposed considering cases where slots/symbols that would normally receive PDSCH cannot receive PDSCH due to UL subband configuration. The methods proposed below may be applied independently, or the problems may be solved as a combination of one or more methods, and all such cases are included in the scope of the disclosure.

### Embodiment 1: PDSCH reception slot definition through extended slot format configuration

The base station may explicitly configure or indicate the transmission direction of the UE (also referred to as extended slot configuration, extended slot format, etc.) in the corresponding slot or symbol for an arbitrary SBFD slot or SBFD symbol. In other words, it may be configured or indicated by the base station whether a UE performs DL reception operation or UL transmission operation in an SBFD symbol or slot. For example, it may be defined that the base station transmits UL-DL configuration information of an SBFD slot or symbol for an arbitrary UE through UE-specific or cell-specific RRC signaling. The corresponding configuration information allows UL and DL configuration to be made targeting the corresponding SBFD slots or symbols based on period information of SBFD slots or symbols according to the UL subband configuration, and SBFD symbols not explicitly configured as UL or DL may implicitly mean that they are configured as flexible symbols. As another method, the base station may transmit UL-DL indication information of the corresponding SBFD slot or SBFD symbol to the UE through L1 control signaling. In this case, UL-DL indication information in the corresponding SBFD slot or SBFD symbol may be indicated through UE-specific DCI or UE-group common DCI.

The transmission direction configuration or indication information for the SBFD slot or symbol may be included in existing RRC signaling or DCI format, or separate RRC signaling or DCI format may be defined.

Alternatively, the transmission direction in an arbitrary SBFD slot or symbol may be implicitly configured by UL subband configuration information. For example, when a UL subband is configured for a DL slot/symbol or flexible slot/symbol by legacy slot configuration for an arbitrary UE, the corresponding UE may implicitly perform UL transmission operation in the corresponding SBFD slot or symbol. Conversely, when a DL subband configuration is made, the corresponding UE may perform DL reception operation in the corresponding SBFD slot or symbol.

As described above, even for symbols not configured as UL by legacy slot configuration for an arbitrary UE (i.e., DL or flexible symbols), if a UL subband is configured for the corresponding symbol (i.e., the corresponding symbol is configured as an SBFD symbol), and also if the extended slot configuration of the UE in the corresponding symbol is configured as UL, the corresponding UE may not receive PDSCH in the corresponding symbol.

Alternatively, when a symbol configured as DL or flexible by *tdd-UL-DL-ConfigurationCommon* or *tdd-UL-DL-ConfigurationDedicated* is reconfigured as an SBFD symbol according to UL subband configuration, whether the UE performs downlink reception or uplink transmission in the corresponding SBFD symbol may be determined based on scheduling control information by L1 control signaling or configuration information through RRC signaling from the base station. In this case, for conflicts between PDSCH reception according to DCI format and PUSCH transmission (or PUCCH transmission) according to DCI format in the same SBFD symbol, the UE may determine the Tx direction in the corresponding SBFD symbol by prioritizing the preceding DCI format or subsequent DCI format based on the reception time of each DCI format.

Accordingly, when PDSCH reception is indicated in an arbitrary SBFD slot according to the multi-PDSCH scheduling information, the corresponding UE may perform the following for PDSCH reception operation in the corresponding SBFD slot.

When scheduling for PDSCH reception across multiple slots is performed by a single DCI format for an arbitrary UE, if at least one symbol allocated for PDSCH reception in any of the plurality of slots is a non-SBFD symbol indicated as UL by *tdd-UL-DL-ConfigurationCommon* or *tdd-UL-DL-ConfigurationDedicated,* or if at least one or more symbols are SBFD symbols indicated as UL by the UE-specific or cell-specific extended slot configuration, it may be defined not to receive PDSCH in the corresponding slot.

In other words, when scheduling for PDSCH reception across multiple slots is performed by a single DCI format for an arbitrary UE, if at least one symbol allocated for PDSCH reception in any of the plurality of slots is a symbol indicated as UL by *tdd-UL-DL-ConfigurationCommon* or *tdd-UL-DL-ConfigurationDedicated* without UL subband configuration (or DL subband configuration), or if UL subband configuration (or DL subband configuration) is configured but the base station instructs the corresponding symbol to perform UL transmission operation by the base station, the corresponding UE may not receive PDSCH in the corresponding slot.

Alternatively, when the UE is scheduled to receive PDSCH across multiple slots by a single DCI format, if at least one symbol allocated for PDSCH reception in any of the plurality of slots is indicated as UL by *tdd-UL-DL-ConfigurationCommon* or *tdd-UL-DL-ConfigurationDedicated,* or if at least one or more symbols are SBFD symbols with a UL subband configuration and the base station indicates UL transmission i or PUCCH/SRS transmission, according to subsequent (or preceding) DCI format reception for the corresponding SBFD symbol, the UE may not receive PDSCH in the corresponding slot.

In summary, when the UE is scheduled to receive PDSCH across multiple slots by a single DCI format, if at least one symbol allocated for PDSCH reception in any of the plurality of slots is indicated as UL by *tdd-UL-DL-ConfigurationCommon* or *tdd-UL-DL-ConfigurationDedicated,* or if at least one or more symbols are SBFD symbols with a UL subband configuration and UL transmission is configured through RRC signaling or indicated through subsequent (or preceding) DCI format by the base station for the corresponding symbol, PDSCH may not be received in the corresponding slot.

However, the subsequent (or preceding) DCI format above refers to determining which is preceding or subsequent based on the time of the symbol at which each DCI format transmission starts, or it may be determined based on the time of the symbol at which each DCI format transmission ends.

Accordingly, in all other cases, if the corresponding UE receives PDSCH in slots or symbols indicated as DL or flexible by legacy slot configuration according to the multi-PDSCH scheduling information, if the corresponding symbol is configured as an SBFD slot, it may be defined that the UE does not receive PDSCH under those conditions.

However, for cases where the SBFD symbol is configured or indicated to fall back to legacy slot configuration by the base station and the corresponding symbol is not indicated as UL by legacy slot configuration, PDSCH reception may be performed in the same manner as in the legacy operation. In other words, when scheduling for PDSCH reception across multiple slots is performed by a single DCI format for an arbitrary UE as described above, if at least one symbol allocated for PDSCH reception in any of the plurality of slots is a non-SBFD symbol indicated as UL by *tdd-UL-DL-ConfigurationCommon* or *tdd-UL-DL-ConfigurationDedicated,* or if at least one or more symbols are SBFD symbols indicated as UL by the UE-specific or cell-specific extended slot configuration and the corresponding symbol is not configured or indicated to fallback to legacy slot configuration by the base station, it may be defined not to receive PDSCH in the corresponding slot.

### Embodiment 2: PDSCH reception restriction configuration through different slot types

However, even in cases where PDSCH reception according to multi-PDSCH scheduling is possible based on transmission direction configuration or indication information for an arbitrary UE in an SBFD slot or symbol as described above, the base station may additionally explicitly or implicitly configure or indicate whether to receive PDSCH according to multi-PDSCH scheduling for each slot type.

As an example of an explicit configuration method, the corresponding configuration information may be defined to be semi-statically configured and transmitted to the UE by the base station through RRC signaling. In other words, when multi-PDSCH scheduling across multiple slots is initiated by the base station, and slots configured or indicated for DL reception of the corresponding UE include both SBFD slots and non-SBFD slots, it may be defined that the base station configures whether to support PDSCH reception of the corresponding UE through the different slot types. In other words, the base station may configure through UE-specific or cell-specific RRC signaling to limit PDSCH reception according to multi-PDSCH scheduling for an arbitrary UE to the SBFD slots or to limit it to the non-SBFD slots. For example, PDSCH reception according to multi-PDSCH scheduling may be limited to the non-SBFD slots, and in this case, whether to receive PDSCH in an arbitrary slot according to multi-PDSCH scheduling may follow the PDSCH reception determination method.

As another explicit method, it is defined that the base station may dynamically indicate whether to support reception through different slot types for PDSCH reception according to the multi-PDSCH scheduling via L1 control signaling. For example, it is defined that the base station includes the corresponding indication information in a DL assignment DCI format (e.g., DCI format 1_0, 1_1, 1_2, etc.). In other words, when the base station indicates PDSCH transmission according to multi-PDSCH scheduling through the DCI format, it is defined that the base station dynamically indicates whether to receive PDSCH through the different slot types or whether to restrict PDSCH reception according to multi-PDSCH scheduling to be limited to a specific slot type in the corresponding DCI format. Alternatively, the corresponding indication information is defined as being provided to UEs through UE-group common DCI.

Further, various combinations of the explicit signaling methods above may be included in the disclosure. For example, an indication information area for whether to support the different slot types or whether to limit slot types may be configured in a specific DCI format for a UE (e.g., DCI format 1_1, 1_2 or UE-group common DCI format, etc.) through RRC signaling for an arbitrary UE and, when configured to include the corresponding indication information area, it is defined that the base station dynamically indicates whether to support different slot types or whether to limit slot types for PDSCH reception according to multi-PDSCH scheduling through this.

Hereinafter, implicit configuration/indication methods are described.

As an example of an implicit configuration method, it may be determined based on whether the frequency resources of a DL BWP activated for a UE and the frequency resources of a DL subband configured by the base station overlap. In other words, it is defined that support the PDSCH reception through different slot types is determined by whether the corresponding active DL BWP and DL subband fully or partially overlap or do not overlap on the frequency axis. In this case, the target for overlap determination may be the frequency resources of the active DL BWP. In other words, when frequency resources of a DL BWP activated for a UE fully fall within a DL subband, it is defined that the UE supports reception across different slot types according to multi-PDSCH scheduling. On the other hand, in cases of partial overlap or non-overlap, PDSCH reception across different slot types may not be supported.

As another method, it may be implicitly determined based on whether the frequency resources allocated by frequency domain resource assignment (FDRA) information area, included in a DL assignment DCI format for PDSCH transmission fall within a DL subband. For example, when frequency resources according to the frequency domain resource assignment information for PDSCH reception under multi-PDSCH scheduling fully fall within a DL subband, PDSCH reception across different slot types is supported, and otherwise, it is defined that such reception is not supported (i.e., PDSCH transmission is performed only within the same slot type).

As another method, whether to support PDSCH reception through the different types of slots may be determined by the slot type of the first slot where PDSCH reception according to the multi-PDSCH scheduling starts. As an example, when PDSCH reception according to multi-PDSCH scheduling is configured/indicated for arbitrary PDSCH reception and the slot where the first PDSCH reception is made by time domain resource assignment information is an SBFD slot, it may be defined that the corresponding PDSCH reception is also possible through non-SBFD slots. On the other hand, in the opposite case, i.e., when PDSCH reception according to multi-PDSCH scheduling is configured/indicated for arbitrary PDSCH reception and the slot where the corresponding PDSCH reception starts by time domain resource assignment information is a non-SBFD slot, it may be defined that the corresponding PDSCH reception is performed only through non-SBFD slots.

Further, various combinations of the implicit configuration methods above may be included in the disclosure. For example, when the slot where the first PDSCH reception according to multi-PDSCH scheduling occurs is an SBFD slot, the corresponding PDSCH reception supports reception through different slot types (i.e., reception is also made through non-SBFD slots). On the other hand, when the starting slot is a non-SBFD slot, depending on whether frequency resources allocated for the corresponding PDSCH reception fully overlap a DL subband, if they fully overlap, reception through different slot types is supported (i.e., reception is also made through SBFD slots), and if not (i.e., partially overlap or non-overlap), reception through different slot types is not supported (i.e., the corresponding PDSCH reception is performed only through non-SBFD slots).

However, whether to support PDSCH reception in different slot types by the explicit or implicit configuration/indication methods proposed above may be limitedly applied to specific slot types. For example, for non-SBFD slots, PDSCH reception is supported when they are not configured as UL according to legacy slot configuration, and additionally, it may be defined that determination of whether to support PDSCH reception only for specific SBFD slots is made by the explicit or implicit methods above.

Further, all combinations of the explicit configuration/indication methods and implicit configuration/indication methods above may be included in the scope of the disclosure. For example, even when explicitly configured/indicated by the base station to support PDSCH reception according to multi-PDSCH scheduling through different slot types (or when explicitly configured/indicated by the base station to support PDSCH reception according to multi-PDSCH scheduling in SBFD slots), if frequency resource allocation information for PDSCH reception does not completely belong to the corresponding DL subband, PDSCH reception through the corresponding SBFD slot may not be performed.

Further, when configured/indicated to support PDSCH reception in SBFD slots according to the methods, new rules for association (or mapping) between DL subband and DL BWP (between frequency resources of SBFD slots and non-SBFD slots) may be configured or defined so that DL subband PRB resources in SBFD slots according to frequency resource allocation information for the corresponding PDSCH reception are always established.

As one method for this, a frequency domain resource set for mapping PRBs in an arbitrary UE's DL BWP to PRBs of a DL subband may be configured. Accordingly, association (mapping) is made between PRBs of the configured resource set and PRBs constituting a DL subband, or PRBs overlapping a DL subband and DL BWP. In this case, only one resource set may be configured for a DL BWP, or one or more resource sets may be configured so that all frequency resources of the corresponding DL BWP, i.e., PRBs, fall within at least one resource set. When one or more resource sets are configured, association (mapping) is made between PRBs of each resource set and PRBs constituting a DL subband, or PRBs overlapping a DL subband and DL BWP. The resource set configuration information may include starting RB information and size information on the frequency axis, or include only starting RB information, and size information may be determined by the size of the DL subband or the size of the overlapping frequency resources between the DL subband and DL BWP.

All the examples above have been described based on slots in the time domain, but the corresponding content may be equally applied to various time resource units such as symbols, subframes, or frames.

Hereinafter, the UE's PDSCH reception method according to the above-described methods is specifically described.

The UE receives cell-specific and/or UE-specific TDD configuration information for uplink transmission and downlink reception from the base station. Further, the UE additionally receives UL subband and DL subband configuration information (or guard band configuration information) to support the SBFD operation. The UE may determine symbols and slots capable of downlink reception based on the TDD configuration information and the UL subband, DL subband, and guard band configuration information.

The UE may receive a DCI format that allocates PDSCH reception resources across a plurality of slots from the base station. The PDSCH reception across the plurality of slots may mean a DCI format for receiving a PDSCH with *pdsch-AggregationFactor* configured or a DCI format including multi-PDSCH scheduling information.

When the UE is allocated PDSCH reception resources across multiple slots via a single DCI format and the plurality of slots include both non-SBFD slots and SBFD slots, PDSCH reception across different slot types may be supported. However, in this case, frequency resources for PDSCH reception according to FDRA included in the corresponding DCI format may be limited to fully fall within the frequency resources of the DL subband. Alternatively, the corresponding DCI format may include scheduling control information in non-SBFD slots and separate scheduling control information in SBFD slots, and for example, FDRA, transmission configuration indicator (TCI) fields, and other fields may be separately configured in non-SBFD slots and SBFD slots and included in one DCI format. Alternatively, in SBFD symbols, frequency regions outside the DL subband among allocated PDSCH frequency resources may be punctured or rate matched for reception.

When PDSCH reception including different slot types is supported in this way, as described above, when the UE is scheduled to receive PDSCH across multiple slots by a single DCI format, if at least one symbols allocated for PDSCH reception in any of the plurality of slots is indicated as UL by *tdd-UL-DL-ConfigurationCommon* or *tdd-UL-DL-ConfigurationDedicated,* or if at least one or more symbols are SBFD symbols with a UL subband configuration and UL transmission is configured through RRC signaling or indicated by a subsequent (or preceding) DCI format from the base station in the corresponding symbol, PDSCH may not be received in the corresponding slot.

However, the subsequent (or preceding) DCI format above refers to determining which is preceding or subsequent based on the time of the symbol at which each DCI format transmission starts, or it may be determined based on the time of the symbol where each DCI format transmission ends.

However, even in cases where PDSCH reception through different slot types is supported, if PDSCH reception symbols in an arbitrary slot include both SBFD symbols and non-SBFD symbols, PDSCH reception in the corresponding slot may not be performed.

Alternatively, when the UE is allocated PDSCH reception resources across multiple slots via a single DCI format and the plurality of slots include both the non-SBFD slots and SBFD slots, it may be limited to receive PDSCH only for specific slot types or only for specific symbol types. For example, it may be limited to receive PDSCH only in non-SBFD symbol types or non-SBFD slot types. Accordingly, among one or more PDSCH reception slots allocated through the corresponding DCI format, the UE is defined to receive the corresponding PDSCH only when all symbols allocated for PDSCH reception in an arbitrary slot are non-SBFD symbols and are not configured as UL according to the TDD configuration. Specifically, when the UE is scheduled to receive PDSCH across multiple slots via a single DCI format, if at least one symbol allocated for PDSCH reception in any of the plurality of slots is indicated as UL by *tdd-UL-DL-ConfigurationCommon* or *tdd-UL-DL-ConfigurationDedicated,* or if at least one or more symbols are SBFD symbols with a UL subband configuration, PDSCH may not be received in the corresponding slot.

Alternatively, among one or more PDSCH reception slots allocated through the corresponding DCI format, the UE is defined to receive PDSCH only when all symbols allocated for PDSCH reception in an arbitrary slot are SBFD symbols and are not configured or indicated to transmit UL in the corresponding SBFD symbols by the base station. Specifically, when the UE is scheduled to receive PDSCH across multiple slots via a single DCI format, if at least one symbol allocated for PDSCH reception in any of the plurality of slots is indicated as UL by *tdd-UL-DL-ConfigurationCommon* or *tdd-UL-DL-ConfigurationDedicated,* or is a DL or flexible symbol without DL subband configuration, or is an SBFD symbol with a DL subband configuration and explicitly configured or indicated by the base station to perform UL transmission, PDSCH may not be received in the corresponding slot.

In this case, the slot or symbol type supporting PDSCH reception may be explicitly configured or indicated through RRC signaling or L1 control signaling by the base station, or implicitly determined by the symbol type through which the DCI format is received, or the first PDSCH reception symbol type according to the corresponding DCI format, etc.

Each of the above-described embodiments is included in the scope of the this disclosure, not only independently but also in any combination thereof.

Configurations of a UE and a base station which may perform all or some of the embodiments described above in connection with FIGS. 1 to 11 are described below with reference to the drawings. The above-described description may be omitted to avoid redundant description and, in such a case, the omitted content may be applied in substantially the same manner to the following description, provided that it does not conflict with the technical spirit of the disclosure.

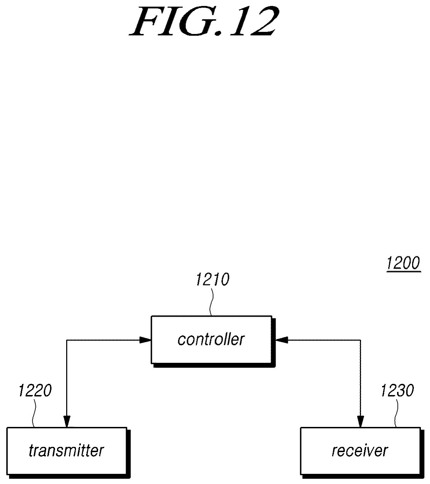

FIG. 12 is a block diagram a UE 1200 according to an embodiment.

Referring to FIG. 12, a UE 1200 according to an embodiment includes a transmitter 1220, a receiver 1230, and a controller 1210 controlling operations of the transmitter and the receiver.

The controller 1210 controls overall operations of the UE 1200 according to the method for receiving a downlink data channel in full-duplex communication necessary to perform the disclosure described above.

The controller 1210 may receive time division duplex (TDD) configuration information and subband configuration information. The controller 1210 may receive TDD configuration information from a base station to determine the symbol format. In this case, the TDD configuration information may include configuration information about the format of the slot and configuration information for determining the symbol format within the slot, and the corresponding information may be received through higher layer signaling or physical layer L1 signaling.

The controller 1210 may receive TDD configuration information for uplink-downlink slot configuration from the base station. In this case, the corresponding slot configuration may be configured on a per-cell basis through higher layer signaling, e.g., cell-specific RRC signaling. In other words, a downlink symbol, an uplink symbol, and a flexible symbol of a predetermined period in which the transmission direction is not determined may be configured through an RRC message for configuring a corresponding UL-DL slot.

Further, the controller 1210 may receive UE-specific RRC signaling that reallocates flexible symbols, among those configured through cell-specific RRC signaling, to uplink symbols, downlink symbols, or flexible symbols for each UE.

Alternatively, the controller 1210 may receive an indication of a dynamic slot format through a UE-group common PDCCH. According to an embodiment, the controller 1210 may dynamically receive an indication of a slot format through DCI format 2_0.

The controller 1210 may receive subband configuration information for full-duplex communication. In other words, the UE may receive configuration information for configuring a downlink subband in an uplink slot or an uplink subband in a downlink slot. The subband configuration information may include time-domain information and frequency-domain information where an uplink subband or a downlink subband is configured. Alternatively, the subband configuration information may include frequency-domain information and time-domain information in which a guard band is configured.

The subband configuration information may be transmitted through a broadcasting scheme transmitted to all the UEs in the cell. Alternatively, it may be transmitted through a multicasting scheme that transmits to UEs requiring a full-duplex communication mode operation, or a unicasting scheme that transmits only to a specific UE. The UE may receive the corresponding configuration information according to the configured scheme.

For example, when an uplink subband is configured in a downlink slot, the uplink subband may be set in the center of the corresponding frequency band or on the edge of the corresponding frequency band. In this case, a guard band may be configured between the uplink subband and downlink subband (e.g., the remaining frequency band other than the uplink subband and guard band among the frequency bands allocated to the UE) in the corresponding slot.

A downlink slot or downlink symbol configured for the UE may include an SBFD symbol in which an uplink subband is configured for full-duplex communication. In other words, an uplink subband may be configured for at least some of the downlink slots or downlink symbols configured for the UE, and in this case, an uplink subband, a downlink subband, and/or a guard band may be configured for the corresponding slot or symbol.

Similarly, an uplink slot or uplink symbol configured for the UE may include an SBFD symbol in which a downlink subband is configured for full-duplex communication. That is, a downlink subband may be configured for at least some of the uplink slots or uplink symbols configured for the UE, and in this case, an uplink subband, a downlink subband, and/or a guard band may be configured for the corresponding slot or symbol.

The controller 1210 may receive downlink control information including resource allocation information for a PDSCH scheduled across a plurality of slots. The controller 1210 may determine at least one symbol for receiving the PDSCH in each of the plurality of slots based on the downlink control information.

The controller 1210 may receive downlink resource allocation information including time resources and frequency resources for receiving a physical downlink shared channel (PDSCH) from the base station. According to an embodiment, the controller 1210 may receive resource allocation information for receiving a PDSCH scheduled in a plurality of slots by one DCI format.

In other words, the controller 1210 may receive downlink control information allocated with PDSCH reception resources across a plurality of slots from the base station. Here, PDSCH reception across a plurality of slots may mean a DCI format for receiving a PDSCH with *pdsch-AggregationFactor* configured, or a DCI format including multi-PDSCH scheduling information.

The controller 1210 may determine at least one symbol allocated for PDSCH reception in each of the plurality of slots based on resource allocation information in the downlink control information. In other words, the controller 1210 may identify symbol positions for receiving a PDSCH for each of the plurality of slots according to resource allocation information in the downlink control information. In this disclosure, the at least one symbol for receiving the PDSCH may be referred to as PDSCH reception symbols. However, it should be understood that this terminology is not limiting.

The controller 1210 may receive a downlink data channel based on whether the at least one symbol includes a subband full duplex (SBFD) symbol configured under the TDD configuration information and the subband configuration information.

According to an embodiment, the controller 1210 may receive a PDSCH only in slots where all of the at least one symbol is SBFD symbols, or receive a PDSCH only in slots where all of the at least one symbol is non-SBFD symbols, among the plurality of slots according to the downlink control information. In other words, for each of the plurality of slots, it may be configured such that a PDSCH is received only in slots where all PDSCH reception symbols are configured as SBFD symbols, or only in slots where all PDSCH reception symbols are configured as non-SBFD symbols.

Specifically, when configured to receive a PDSCH only in slots where all PDSCH reception symbols are configured as non-SBFD symbols, the controller 1210 may not receive a PDSCH in the corresponding slot when the PDSCH reception symbols are indicated as UL by *tdd-UL-DL-ConfigurationCommon* or *tdd-UL-DL-ConfigurationDedicated,* or when the PDSCH reception symbols are SBFD symbols with an uplink subband configuration.

Alternatively, when the PDSCH reception symbols are all configured as SBFD symbols for receiving a PDSCH, the controller 1210 may not receive a PDSCH in the corresponding slot when the PDSCH reception symbols are indicated as UL by *tdd-UL-DL-ConfigurationCommon* or *tdd-UL-DL-ConfigurationDedicated,* or when they are DL symbols or flexible symbols without subband configuration, or when are SBFD symbols configured or indicated by the base station to explicitly perform uplink transmission.

In this case, according to one example, the type of symbol for receiving the PDSCH may be configured or indicated by the base station, determined by the type of symbol in which the downlink control information is received, or determined by the symbol type of the first slot among the plurality of slots. That is, whether to receive the PDSCH only when all PDSCH reception symbols are SBFD symbol type or only when all are non-SBFD symbol type may be determined by the above-described method.

According to an example, the controller 1210 may receive a PDSCH in slots where all symbols are SBFD symbols and slots where all symbols are non-SBFD symbols, among the plurality of slots according to the downlink control information. In other words, for each of the plurality of slots, it may be configured such that a PDSCH is received in slots where all PDSCH reception symbols are configured as SBFD symbols and in slots where all PDSCH reception symbols are configured as non-SBFD symbols.

In this case, according to one embodiment, the controller 1210 may not receive a PDSCH in slots where at least one of the PDSCH reception symbols is configured or indicated by the base station, among the at least one symbol, among slots where all of the at least one symbol are SBFD symbols.

Specifically, the controller 1210 may not receive a PDSCH in the corresponding slot when the PDSCH reception symbols are indicated as UL by *tdd-UL-DL-ConfigurationCommon* or *tdd-UL-DL-ConfigurationDedicated,* or when the PDSCH reception symbols are SBFD symbols with a UL subband configuration, where UL transmission is configured through RRC signaling or indicated through a DCI format by the base station in the corresponding symbol.

Further, according to one embodiment, the controller 1210 may not receive a PDSCH in slots where frequency resources allocated according to frequency domain resource allocation (FDRA) in the downlink control information are not completely contained within the frequency domain of a downlink subband, among slots where all of the at least one symbol are SBFD symbols.

In other words, frequency resources for PDSCH reception according to FDRA included in the corresponding DCI format may be limited to fully fall within the frequency resources of the downlink subband. Alternatively, the corresponding DCI format may include scheduling control information in non-SBFD slots and separate scheduling control information in SBFD slots. In this case, e.g., FDRA, transmission configuration indicator (TCI) fields, etc. may be separately configured in non-SBFD slots and SBFD slots and included in one downlink control information. Alternatively, in SBFD symbols, frequency regions outside the downlink subband among allocated PDSCH frequency resources may be punctured or rate matched for reception.

According to the embodiments described above, a downlink data channel may be efficiently transmitted and received within slots or symbols where full-duplex communication is applied.

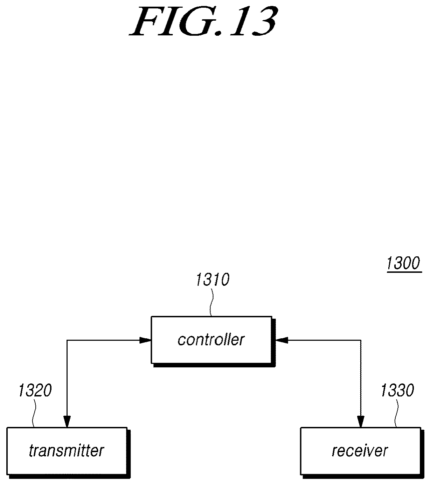

FIG. 13 is a block diagram illustrating a base station 1300 according to an embodiment.

Referring to FIG. 13, a base station 1300 according to an embodiment includes a transmitter 1320, a receiver 1330, and a controller 1310 controlling operations of the transmitter and the receiver.

The controller 1310 controls overall operations of the base station 1300 according to the method for transmitting a downlink data channel in full-duplex communication necessary to perform the disclosure described above. The transmitter 1320 transmits downlink control information and data or messages to the UE via a corresponding channel. The receiver 1330 receives uplink control information and data or messages from the UE via a corresponding channel.

The controller 1310 may transmit time division duplex (TDD) configuration information and subband configuration information. The controller 1310 may transmit TDD configuration information to the UE to determine the format of symbols within a slot. In this case, the TDD configuration information may include configuration information about the slot format and configuration information for determining the format of the symbol in the slot, and the corresponding information may be received through higher layer signaling or physical layer L1 signaling.

In other words, a downlink symbol, an uplink symbol, and a flexible symbol of a predetermined period in which the transmission direction is not determined may be configured through an RRC message for configuring a corresponding UL-DL slot. Further, the controller 1310 may transmit UE-specific RRC signaling that reallocates flexible symbols, among those configured through cell-specific RRC signaling are reallocated to uplink symbols, downlink symbols, or flexible symbols for each UE.

Alternatively, the controller 1310 may indicate a dynamic slot format through UE-group common PDCCH. According to an embodiment, the controller 1310 may dynamically indicate a slot format through DCI format 2_0.

The controller 1310 may transmit subband configuration information for full-duplex communication to the UE. In other words, the base station may transmit configuration information for configuring a downlink subband in an uplink slot or an uplink subband in a downlink slot. The subband configuration information may include time-domain information and frequency-domain information where an uplink subband or a downlink subband is configured. Alternatively, the subband configuration information may include frequency-domain information and time-domain information where a guard band is configured.

A downlink slot or downlink symbol configured for the UE may include an SBFD symbol in which an uplink subband is configured for full-duplex communication. In other words, an uplink subband may be configured for at least some of the downlink slots or downlink symbols configured for the UE, and in this case, an uplink subband, a downlink subband, and/or a guard band may be configured for the corresponding slot or symbol.

Similarly, an uplink slot or uplink symbol configured for the UE may include an SBFD symbol in which a downlink subband is configured for full-duplex communication. That is, a downlink subband may be configured for at least some of the uplink slots or uplink symbols configured for the UE, and in this case, an uplink subband, a downlink subband, and/or a guard band may be configured for the corresponding slot or symbol.

The controller 1310 may transmit downlink control information including resource allocation information for a PDSCH scheduled across a plurality of slots.

The controller 1310 may transmit downlink resource allocation information including time resources and frequency resources for receiving a physical downlink shared channel (PDSCH) to the UE. According to an embodiment, the controller 1310 may transmit resource allocation information for receiving a PDSCH scheduled in a plurality of slots by one DCI format.

In other words, the controller 1310 may transmit downlink control information allocated with PDSCH reception resources across a plurality of slots to the UE. Here, PDSCH transmission across a plurality of slots may mean a DCI format for transmitting a PDSCH with *pdsch-AggregationFactor* configured, or a DCI format including multi-PDSCH scheduling information.

The UE may determine at least one symbol allocated for PDSCH reception in each of the plurality of slots based on resource allocation information in the downlink control information. In other words, the UE may identify symbol positions for receiving a PDSCH for each of the plurality of slots according to resource allocation information in the downlink control information. In the disclosure, the at least one symbol for the UE to receive a PDSCH may be referred to as PDSCH reception symbols. Hereinafter, to avoid confusion, the same terminology, "PDSCH reception symbols," is also used in the description with respect to the base station.

The controller 1310 may transmit a downlink data channel based on whether at least one symbol for transmitting the PDSCH in each of the plurality of slots includes a subband full duplex (SBFD) symbol configured under the TDD configuration information and the subband configuration information.

According to an embodiment, the controller 1310 may transmit a PDSCH only in slots where all of the at least one symbol is SBFD symbols, or transmit a PDSCH only in slots where all of the at least one symbol is non-SBFD symbols, among the plurality of slots according to the downlink control information. In other words, for each of the plurality of slots, it may be configured such that a PDSCH is transmitted only in slots where all PDSCH reception symbols are configured as SBFD symbols, or only in slots where all PDSCH reception symbols are configured as non-SBFD symbols.

Specifically, when configured to receive a PDSCH only in slots where all PDSCH reception symbols are configured as non-SBFD symbols, the controller 1310 may not transmit a PDSCH in the corresponding slot when the PDSCH reception symbols are indicated as UL by *tdd-UL-DL-ConfigurationCommon* or *tdd-UL-DL-ConfigurationDedicated,* or when the PDSCH reception symbols are SBFD symbols with an uplink subband configuration.

Alternatively, when configured to receive a PDSCH only in slots where all PDSCH reception symbols are configured as SBFD symbols, the controller 1310 may not transmit a PDSCH in the corresponding slot when the PDSCH reception symbols are indicated as UL by *tdd-UL-DL-ConfigurationCommon* or *tdd-UL-DL-ConfigurationDedicated,* or when are DL symbols or flexible symbols without subband configuration, or when are SBFD symbols configured or indicated by the base station to explicitly perform uplink transmission.

In this case, according to one embodiment, the type of symbol for receiving the PDSCH may be configured or indicated by the base station, determined by the type of symbol through the downlink control information is received, or determined by the symbol type of the first slot among the plurality of slots. In other words, whether to receive the PDSCH only when all PDSCH reception symbols are SBFD symbol type or only when all are non-SBFD symbol type may be determined by the above-described method.

According to an embodiment, the controller 1310 may transmit a PDSCH in slots where all of symbols are SBFD symbols and slots where all of symbols are non-SBFD symbols, among the plurality of slots according to the downlink control information. In other words, for each of the plurality of slots, it may be configured such that a PDSCH is transmitted in slots where all PDSCH reception symbols are configured as SBFD symbols and in slots where all PDSCH reception symbols are configured as non-SBFD symbols.

In this case, according to one embodiment, the controller 1310 may not transmit a PDSCH in slots where at least one of the PDSCH reception symbols is configured or indicated by the base station for uplink transmission, among slots where all of the at least one symbol is SBFD symbols.

Specifically, the controller 1310 may not transmit a PDSCH in the corresponding slot when the PDSCH reception symbols are indicated as UL by *tdd-UL-DL-ConfigurationCommon* or *tdd-UL-DL-ConfigurationDedicated,* or when the PDSCH reception symbols are SBFD symbols with an uplink subband configuration, where UL transmission is configured through RRC signaling or indicated through a DCI format by the base station in the corresponding symbol.

Further, according to one embodiment, the controller 1310 may not transmit a PDSCH in slots where frequency resources allocated according to frequency domain resource allocation (FDRA) in the downlink control information are not completely contained within the frequency domain of a downlink subband, among slots where all of the at least one symbol is SBFD symbols.

In other words, frequency resources for PDSCH transmission according to FDRA included in the corresponding DCI format may be limited to fully fall within the frequency resources of the downlink subband. Alternatively, the corresponding DCI format may include scheduling control information for non-SBFD slots and separate scheduling control information for SBFD slots. Alternatively, in SBFD symbols, frequency regions outside the downlink subband among allocated PDSCH frequency resources may be punctured or rate matched for reception.

According to the embodiments described above, a downlink data channel may be efficiently transmitted and received within slots or symbols where full-duplex communication is applied.

The embodiments described above may be supported by the standard documents disclosed in at least one of the radio access systems such as IEEE 802, 3GPP, and 3GPP2. That is, the steps, configurations, and parts, which have not been described in the present embodiments, may be supported by the above-mentioned standard documents for clarifying the technical concept of the disclosure. In addition, all terms disclosed herein may be described by the standard documents set forth above.

The above-described embodiments may be implemented by any of various means. For example, the present embodiments may be implemented as hardware, firmware, software, or a combination thereof.

In the case of implementation by hardware, the method according to the present embodiments may be implemented as at least one of an application specific integrated circuit (ASIC), a digital signal processor (DSP), a digital signal processing device (DSPD), a programmable logic device (PLD), a field programmable gate array (FPGA), a processor, a controller, a microcontroller, or a microprocessor.

In the case of implementation by firmware or software, the method according to the present embodiments may be implemented in the form of an apparatus, a procedure, or a function for performing the functions or operations described above. Software code may be stored in a memory unit, and may be driven by the processor. The memory unit may be provided inside or outside the processor, and may exchange data with the processor by any of various well-known means.

In addition, the terms "system", "processor", "controller", "component", "module", "interface", "model", "unit", and the like may generally mean computer-related entity hardware, a combination of hardware and software, software, or running software. For example, the above-described components may be, but are not limited to, a process driven by a processor, a processor, a controller, a control processor, an entity, an execution thread, a program and/or a computer. For example, both the application that is running in a controller or a processor and the controller or the processor may be components. One or more components may be provided in a process and/or an execution thread, and the components may be provided in a single device (e.g., a system, a computing device, etc.), or may be distributed over two or more devices.

The above embodiments of the present disclosure have been described only for illustrative purposes, and those skilled in the art will appreciate that various modifications and changes may be made thereto without departing from the scope and spirit of the disclosure. Further, the embodiments of the disclosure are not intended to limit, but are intended to illustrate the technical idea of the disclosure, and therefore the scope of the technical idea of the disclosure is not limited by these embodiments. The scope of the present disclosure shall be construed on the basis of the accompanying claims in such a manner that all of the technical ideas included within the scope equivalent to the claims belong to the present disclosure.

### CROSS-REFERENCE TO RELATED APPLICATION

This application claims priority under 35 U.S.C. §119(a) to Korean Patent Application No. 10-2023-0046112, filed on April 7, 2023, and Korean Patent Application No. 10-2024-0046531, filed on April 5, 2024, the entire contents of which are incorporated herein by reference. Furthermore, this application claims priority to the above applications for the same reasons in countries other than the United States, and the entire contents thereof are also incorporated herein by reference.

## Claims

1. A method for a user equipment (UE) to receive a physical downlink shared channel (PDSCH) in full duplex, the method comprising:
receiving time division duplex (TDD) configuration information and subband configuration information;
receiving downlink control information including resource allocation information for a PDSCH scheduled through a plurality of slots;
determining at least one symbol for receiving the PDSCH in each of the plurality of slots based on the downlink control information; and
receiving the PDSCH based on whether the at least one symbol includes a subband full duplex (SBFD) symbol configured according to the TDD configuration information and the subband configuration information.

2. The method of claim 1, wherein receiving the PDSCH includes receiving the PDSCH only in slots where all of the at least one symbol are the SBFD symbols, or receiving the PDSCH only in slots where all of the at least one symbol are non-SBFD symbols, among the plurality of slots according to the downlink control information.

3. The method of claim 2, wherein a type of symbol for receiving the PDSCH is configured or indicated by a base station, determined by a type of symbol in which the downlink control information is received, or determined by a symbol type of a first slot among the plurality of slots.

4. The method of claim 1, wherein receiving the PDSCH includes receiving the PDSCH in both slots where all of the at least one symbol are the SBFD symbols and slots where all of the at least one symbol are non-SBFD symbols, among the plurality of slots according to the downlink control information.

5. The method of claim 4, wherein receiving the PDSCH includes not receiving the PDSCH in slots where there is a symbol configured or indicated for uplink transmission by a base station among the at least one symbol, among slots where all of the at least one symbol are SBFD symbols.

6. The method of claim 4, wherein receiving the PDSCH includes not receiving the PDSCH in slots where frequency resources allocated according to a frequency domain resource allocation (FDRA) in the downlink control information are not completely included in a frequency domain of a downlink subband, among slots where all of the at least one symbol are SBFD symbols.

7. A method for a base station to transmit a physical downlink shared channel (PDSCH) in full duplex, the method comprising:
transmitting time division duplex (TDD) configuration information and subband configuration information;
transmitting downlink control information including resource allocation information for a PDSCH scheduled through a plurality of slots; and
transmitting the PDSCH based on whether at least one symbol for transmitting the PDSCH in each of the plurality of slots includes a subband full duplex (SBFD) symbol configured according to the TDD configuration information and the subband configuration information.

8. The method of claim 7, wherein transmitting the PDSCH includes transmitting the PDSCH only in slots where all of the at least one symbol are the SBFD symbols, or transmitting the PDSCH only in slots where all of the at least one symbol are non-SBFD symbols, among the plurality of slots according to the downlink control information.

9. The method of claim 8, wherein a type of symbol for receiving the PDSCH is configured or indicated by the base station, determined by a type of symbol in which the downlink control information is received, or determined by a symbol type of a first slot among the plurality of slots.

10. The method of claim 7, wherein transmitting the PDSCH includes transmitting the PDSCH in both slots where all of the at least one symbol are the SBFD symbols and slots where all of the at least one symbol are non-SBFD symbols, among the plurality of slots according to the downlink control information.

11. The method of claim 10, wherein transmitting the PDSCH includes not transmitting the PDSCH in slots where there is a symbol configured or indicated for uplink transmission by a base station among the at least one symbol, among slots where all of the at least one symbol are SBFD symbols.

12. The method of claim 10, wherein transmitting the PDSCH includes not transmitting the PDSCH in slots where frequency resources allocated according to a frequency domain resource allocation (FDRA) in the downlink control information are not completely included in a frequency domain of a downlink subband, among slots where all of the at least one symbol are SBFD symbols.

13. A user equipment (UE) receiving a physical downlink shared channel (PDSCH) in full duplex, the UE comprising:
a transmitter;
a receiver; and
a controller controlling an operation of the transmitter and the receiver, wherein the controller is configured to:
receive time division duplex (TDD) configuration information and subband configuration information;
receive downlink control information including resource allocation information for a PDSCH scheduled through a plurality of slots;
determine at least one symbol for receiving the PDSCH in each of the plurality of slots based on the downlink control information; and
receive the PDSCH based on whether the at least one symbol includes a subband full duplex (SBFD) symbol configured according to the TDD configuration information and the subband configuration information.

14. The UE of claim 13, wherein the controller is configured to receive the PDSCH only in slots where all of the at least one symbol are the SBFD symbols, or receive the PDSCH only in slots where all of the at least one symbol are non-SBFD symbols, among the plurality of slots according to the downlink control information.

15. The UE of claim 14, wherein a type of symbol for receiving the PDSCH is configured or indicated by a base station, determined by a type of symbol in which the downlink control information is received, or determined by a symbol type of a first slot among the plurality of slots.

16. The UE of claim 13, wherein the controller is configured to receive the PDSCH in both slots where all of the at least one symbol are the SBFD symbols and slots where all of the at least one symbol are non-SBFD symbols, among the plurality of slots according to the downlink control information.

17. The UE of claim 16, wherein the controller is configured not to receive the PDSCH in slots where there is a symbol configured or indicated for uplink transmission by a base station among the at least one symbol, among slots where all of the at least one symbol are SBFD symbols.

18. The UE of claim 16, wherein the controller is configured not to receive the PDSCH in slots where frequency resources allocated according to a frequency domain resource allocation (FDRA) in the downlink control information are not completely included in a frequency domain of a downlink subband, among slots where all of the at least one symbol are SBFD symbols.
